# EUROPEAN PATENT SPECIFICATION

(11) **EP 2 914 904 B1**
(45) Date of publication and mention of the grant of the patent: **09.10.2019**
(21) Application number: 13718619.3
(22) Date of filing: 04.03.2013
(51) Int. Cl.: F23G 5/00, C10J 3/00, F02C 3/28, F01K 13/00

(54) **STRUCTURAL CONFIGURATION AND METHOD FOR ENVIRONMENTALLY SAFE WASTE AND BIOMASS PROCESSING TO INCREASE THE EFFICIENCY OF ENERGY AND HEAT GENERATION**
STRUKTURELLE KONFIGURATION UND VERFAHREN FÜR UMWELTFREUNDLICHE ABFALL- UND BIOMASSEVERWERTUNG ZUR ERHÖHUNG VOM EFFIZIENZ DER ENERGIE- UND WÄRMEERZEUGUNG
CONFIGURATION DE STRUCTURE ET PROCÉDÉ POUR LE TRAITEMENT DE BIOMASSE ET DE DÉCHETS SANS DANGER POUR L'ENVIRONNEMENT POUR ACCROÎTRE LE RENDEMENT DE PRODUCTION D'ÉNERGIE ET DE CHALEUR

(30) Priority: 05.11.2012 HU P1200629
(43) Date of publication of application: 09.09.2015
(73) Proprietor: Int-Energia Kft., 1135 Budapest (HU); Okft Kft., 6750 Algyö (HU)
(72) Inventor: BELOPOTATOV, Oleg, 140082 Lytkarino (RU); KUDRINSKIY, Alexey, 119361 Moscow (RU); POTASHNIK, Evgeni, 140082 Lytkarino (RU); POTASHNIK, Lázár, 1135 Budapest (HU); POTASHNIK, Mikhail, 390021 Ryazan (RU); SULIMOV, Daniil, 614007 Perm (RU); VOSCHININ, Sergey, 125130 Moscow (RU)
(74) Representative: Kormos, Ágnes
(86) International application number: PCT/HU2013/000023
(87) International publication number: WO 2014/068344

(56) References cited:
- WO-A1-2010/059219
- WO-A1-2010/065137
- US-A1- 2007 072 949
- US-A1- 2009 049 748
- US-A1- 2010 011 778
- US-A1- 2010 105 127
- US-A1- 2011 291 425
- US-A1- 2012 005 959
- US-A1- 2012 137 700
- US-A1- 2012 193 925
- US-A1- 2012 232 173
- US-A1- 2015 300 635

## Description

The present invention relates to the method and structural configuration for environmentally safe waste and biomass processing to increase the efficiency of energy and heat generation which can be successfully used in energy and environmental sphere and in the sphere of high-temperature plasma solid municipal and industrial waste and biomass processing using their energy potential to generate electric power and heat, on the one hand, and at the same time to manufacture materials and marketable products from carbon dioxide which can be used in construction, pharmaceutical, fragrance, agricultural and other industries, on the other hand.

Prior art configurations of plasma units using these technologies where pyrolysis gas generated as a result of thermal destruction of solid municipal and industrial wastes is either burnt with a further use of high-temperature combustion products to generate steam which is fed to the turbine generator sets for electric power generation or after preliminary gas cleaning, pyrolysis gas is used as a fuel for diesel units or gas turbines generating electric power. Besides, as a result of high-temperature destruction of solid municipal and industrial waste, an ecologically pure glass-like slag is produced which can be used as a construction material or after appropriate processing as a heat-insulation material.

For example, waste processing unit described in patent WO 03/069227 which in accordance with Figure 7 consists of a waste loading system to the plasma reactor, plasma reactor, afterburner reactor, pyrolysis gas cleaning system, energy and heat generation system, exhaust stack, control system, and metal and glass-like slag drain system; where afterburner reactor is connected through the heat recovery steam generator to the turbogenerator which generates power. Disadvantage of this prior art is that the turbine generator set used has a low efficiency and, thus, power generation is not efficient.

This patent also includes an alternative configuration of the waste processing unit (Fig. 3a) which consists of a plasma reactor, pyrolysis gas cleaning system, energy and heat generation system, and exhaust stack; where energy generation system includes a gas turbine connected to the electrical generator and heat recovery steam generator which output is linked to the steam turbine connected to the electrical generator; where electrical generators of gas and steam turbines generate electric power for external consumers. Using gas turbine running on pyrolysis gas of low heating value as part of the waste processing unit, also results in decrease of the unit efficiency which is also regarded as disadvantage.

Plasma waste processing unit described in patent WO 0153434 (Fig. 1A) consists of an arc plasma reactor, pyrolysis gas cleaning system, and a gas turbine running on two types of fuel which can be supplied to the gas turbine combustion chamber simultaneously. Such alternatives as natural gas or diesel fuel are proposed as an additional fuel in this patent. Using these types of additional fuel leads to rise in price of the entire waste processing and, thus, increase in cost of electric power and heat generation which makes this waste processing method unprofitable.

According to the patent WO 2010/065137 A1, method and system are meant for reducing emissions of greenhouse gases during performance of the large-scale industrial waste processes.

According to the patent WO 2010/065137 A1, "The method includes the steps of supplying a waste material to a plasma melter: supplying steam to the plasma melter; extracting a syngas from the plasma melter; supplying the syngas to an industrial process; producing a waste greenhouse gas in the industrial process; returning the greenhouse gas to the plasma melter; and recycling the greenhouse gas in the plasma melter to form syngas. The waste material may be a biomass or an algae that is specifically grown from CO2 as a fuel for a plasma melter. Preferably, the plasma melter is operated in a pyrolysis mode". In such embodiment, algae are fed in the raw state and are the fuel for plasma convertor.

According to the patent WO 2010/065137 A1, only CO2 distribution ((126) figure 1) is shown, and there's no dosing of CO2.

There is a prior art power generation unit (RU 81561 utility model). Power generation unit consists of a municipal waste receiving and accumulation section, plasma waste processing unit, plasma reactors, water treatment systems, power unit for electric power and heat supply with gas and steam turbines connected to electrical generators, gas cleaning units and exhaust stack, receiving section for waste containing plastics which are connected to the converters processing waste containing plastics into liquid diesel fuel which are connected with double-zone combustion chambers of gas turbines. During liquid fuel production in the converter, if the parameters of liquid fuel deviate (increased concentration of sulphur), the liquid fuel of poor quality may enter the combustion chamber of gas turbine which can affect its operability. Thus, special gas turbines which can operate at increased concentration of sulphur in the fuel are required to be used to ensure reliable operation of the plant which limits the range of gas turbines applied for the unit operation being and their high cost, in its turn, is also a disadvantage of this prior art.

It has also been discovered that solid municipal and industrial waste is a part of an everyday life of any industrially developed society and its disposal represents a great challenge. Solid municipal and industrial waste disposal at dumps becomes more difficult as disposal areas are getting less in number. Such a traditional approach poses a risk of groundwaters and adjacent areas pollution, thus, safety disposal is becoming more expensive as well as this method is not cost-effective.

In view of the above, the object of an invention is to remove the disadvantages of the prior art and to provide a method and structural configuration which allow to improve the efficiency of solid municipal and industrial waste and biomass processing during electric and thermal energy generation as well as to increase the environmentally safety level of the process of solid municipal and industrial waste and biomass processing and establish high-performance and cost-effective production.

The invention is a structural configuration according to claim 1 and a method according to 4.

Embodiment of the invention is based upon the recognized fact that solid municipal and industrial waste as well as biomass are loaded and milled and afterwards they are subject to pyrolysis and gasification, produced pyrolysis gas is cooled, cleaned and carbon dioxide is captured from it, cleaned pyrolysis gas is compressed and accumulated together with syngas and they are used for electric power and heat generation and this generated electric power and heat is supplied to external consumers; from heat occurred during pyrolysis gas cooling, additional electric energy is generated, in its turn; during pyrolysis and gasification, melting occurs and basalt-like slag is produced which is processed and used for production of a heat-insulation material or granulated slag; carbon dioxide captured from exhaust gases occurred as a result of electric power and heat generation, is compressed and accumulated together with carbon dioxide recovered from pyrolysis gas, and after distribution and dosing, first, it is sent to plasma torches as plasma-forming gas, second, it is used for production of marketable products using carbon dioxide for external consumers, third, it is fed as a nutrient to cultivate algae; herewith, seed material is loaded and algae is cultivated using light and heat sources and carbon dioxide and thus algae biodiesel and biomass production is provided; produced biodiesel is cleaned, accumulated and used simultaneously with cleaned pyrolysis gas to generate electric power and heat and biomass extraction is returned to the beginning of the process; algae biomass and oil received as a result of liquid biofuel production are supplied to external consumers as marketable products; in addition, for the purpose of processing waste range expansion, coal dust is loaded simultaneously at the beginning of the process afterwards syngas is generated using heat then it is compressed and together with cleaned pyrolysis gas it is accumulated and used for generation of electric power and heat; thus, structural configuration and method of the invention meet the object in view.

Nature of the invention is a structural configuration and method for environmentally safe waste and biomass processing to increase the efficiency of electric power and heat generation.

Structural configuration of the invention includes a plasma waste and biomass processing unit consisting of the first solid municipal and industrial waste treatment input and the second biomass treatment input which are also the first and second inputs of the waste and biomass loading and shredding system. Plasma waste and biomass processing unit also includes, at least, one plasma converter, pyrolysis gas cleaning system, first compression system, and first gasholder. At least, one output of the waste loading and shredding system is connected to the first input of, at least, one plasma converter; the second output of, at least, one plasma converter is connected to the input of a basalt-like slag processing unit. Output of the first compression system is connected to the first input of the first gasholder and output of the first gasholder is also the second output of the plasma waste and biomass processing unit which is connected to the second input of a dual-fuel regulator of the steam & gas turbine unit which is also the second input of a steam & gas turbine unit. The first output of the heat recovery hot water generator is also the first heat output from the plasma waste and biomass processing unit which is connected to the third input of a steam & gas turbine unit which is also the third input of a heat recovery steam generator of the steam & gas turbine unit. The steam & gas turbine unit comprises, at least, one gas turbine comprising a compressor, dual-fuel combustion chamber, and turbine; besides it comprises, at least, one electrical generator, at least, one heat recovery steam generator, steam turbine, second electrical generator, water treatment system, and, at least, one exhaust stack. Compressor output is connected to the third input of a dual-fuel combustion chamber; the first input of a dual-fuel combustion chamber is connected to the first output of a dual-fuel regulator and the second output is connected to the second input of a dual-fuel combustion chamber. The dual-fuel combustion chamber output is connected to the turbine input; the first output of the turbine is connected to the first electrical generator which output is also the first connection output for external power consumers in the configuration. The second turbine output is connected to the first input of a heat recovery steam generator, the second input of a heat recovery steam generator is connected to the water treatment system; the first output of a heat recovery steam generator connected to the first output of a steam turbine is also the third connection output for external heat consumers in the configuration. The second output of a heat recovery steam generator is connected to the steam turbine input and the second output of a steam turbine is connected to the input of the second electrical generator which output is also the second connection output for external power consumers in the configuration. Output of the exhaust stack is connected to the input of a process control and monitoring system which has two-way communications with other units in the configuration and consists of one process control and monitoring system and, at least, one environmental emission control system. The basalt-like slag processing unit comprises a liquid slag unloading system which input is connected the output of a plasma waste and biomass processing unit. Output of a liquid slag unloading system is connected through a fiber forming system to the input of a fiber-precipitation system; one output of the fiber-recipitation system is connected to the input of a heat-insulalion material forming system and another output is connected to the input of a non-fiber particle collecting and granulating system. Output of the heat-insulation material forming system is also a heat-insulation material output in the configuration; output of the non-fiber particle collecting and granulating system is also a granulated slag output in the configuration or to the input of the liquid slag unloading system of the basalt-like slag processing unit is connected the second output of a plasma converter of the plasma waste and biomass processing unit. Output of the liquid slag unloading system is connected to the input of a slag collecting and granulating system and output of the slag collecting and granulating system is also a granulated slag output in the configuration.

The structural configuration is characterised in that the first output of, at least, one plasma converter of the plasma waste and biomass processing unit is connected to the input of a heat recovery hot water generator. The second output of the heat recovery hot water generator is connected through pyrolysis gas cleaning system to the input of the first carbon dioxide capture system; first output of the first carbon dioxide capture system is connected to the input of the first compression system; second output of the first carbon dioxide capture system is connected through the second compression system to, at least, one of the inputs of the second gasholder. Output of the second gasholder is connected to the input of a carbon dioxide distribution and dosing system; the first output of the carbon dioxide distribution and dosing system is connected to the second input of a plasma converter. The second output of a carbon dioxide distribution and dosing system is also the third output of the plasma waste and biomass processing unit which is connected to the input of a carbon dioxide marketable product production unit. Output of the carbon dioxide marketable product production unit is also the carbon dioxide marketable product output in the configuration; the third output of the carbon dioxide distribution and dosing system is also the fourth output of the plasma waste and biomass processing unit which is connected to the first input of an algae biodiesel and biomass production unit. The second input of the algae biodiesel and biomass production unit is connected to the third connection output of a steam & gas turbine unit and the second input of a coal syngas generator unit; the third output of the algae biodiesel and biomass production unit is connected to the first intput of the steam & gas turbine unit. The first input of, at least, one fuel regulator of the steam & gas turbine unit is connected to the output of, at least, one gas turbine fuel preparation system which input is also the first input of the steam & gas turbine unit. The third output of a heat recovery steam generator of the steam & gas turbine unit is connected to the input of the second carbon dioxide capture system; the first output of the second carbon dioxide capture system is connected to the input of, at least, one exhaust stack; the second output of the second carbon dioxide capture system is also the fourth output of the steam & gas turbine unit which is connected to the fourth input of the plasma waste and biomass processing unit which is also the input of the third compression system which output is connected to, at least, one of the inputs of the second gasholder. The third input of a plasma waste and biomass processing unit is also the input of the fourth compression system which is connected to the output of a coal syngas generator unit which comprises the first coal dust treatment input; output of the fourth compression system, in its turn, is connected to, at least, one of the inputs of the first gasholder.

In the first preferred embodiment of the structural configuration of the invention the algae biodiesel and biomass production unit comprises the first heat exchanger, photo-bioreactor, separator, press, centrifuge, algae biodiesel production unit, algae biodiesel cleaning system, and algae biodiesel storage, which first input is also the first input of a photo-bioreactor. The second photo-bioreactor input is connected to the output of the first heat exchanger which input is also the second input of the algae biodiesel and biomass production unit which is connected to the third connection output for external heat consumers and the second input of a coal syngas generator unit. The photo-bioreactor output is connected through the separator with the press input which first output is also the first algae biomass marketable product output of the algae biodiesel and biomass production unit which is connected the second input of the plasma waste and biomass processing unit. The second press output is connected to the centrifuge input which first output is also the second algae oil marketable product output of the algae biodiesel and biomass production unit. The second centrifuge output is connected through the algae biodiesel production unit and algae biodiesel cleaning system with the algae biodiesel storage input; output of the algae biodiesel storage is also the third output of the algae biodiesel and biomass production unit which is connected to the input of, at least, one gas turbine fuel preparation system of the steam & gas turbine unit.

In the second preferred embodiment of the structural configuration of the invention the coal syngas generator unit comprises the first coal dust treatment input which is also the input of a coal dust loading system; output of the coal dust loading system is connected to the first input of a coal syngas generator unit which output is connected with the syngas cleaning system which output is also the first output of the coal syngas generator unit. The second input of a coal syngas generator unit is connected to the second heat exchanger output which input is also the second input of the coal syngas generator unit; the second input of the coal syngas generator unit is connected to the third connection output for external heat consumers.

The subject-matter of the invention is also the method for environmentally safe waste and biomass processing to increase the efficiency of electric power and heat generation which consists in that waste and biomass are loaded and milled and afterwards they are subject to pyrolysis and gasification; produced pyrolysis gas is cooled, cleaned and carbon dioxide is captured from it, cleaned pyrolysis gas is compressed and accumulated together with syngas and they are used for electric power and heat generation and this generated electric power and heat is supplied to external consumers. Additional electric power is generated from the heat occurred as a result of pyrolysis gas cooling in its turn. During pyrolysis and gasification basalt-like slag is produced which after processing becomes a heat-insulation material or granulated slag.

Method of the invention is characterized in that carbon dioxide captured from exhaust gases occurred as a result of electric power and heat generation, is compressed, accumulated together with carbon dioxide recovered from pyrolysis gas and, after distribution and dosing, it is, first, sent to plasma torches as plasma-forming gas, second, it is used for production of marketable products using carbon dioxide for external consumers, third, it is fed as a nutrient to cultivate algae, herewith seed material is loaded and algae is cultivated using light and heat sources and carbon dioxide and, thus, algae biodiesel and biomass production is provided. The produced biodiesel is cleaned, accumulated and used simultaneously with cleaned pyrolysis gas for generation of electric power and heat; biomass extraction is returned to the beginning of the process and algae biomass and oil received as a result of liquid biofuel production are supplied to external consumers as marketable products. In addition, to expand the range of processing waste, coal dust is loaded simultaneously at the beginning of the process, syngas is generated using heat then it is compressed and together with cleaned pyrolysis gas it is accumulated and used for generation of electric power and heat.

In another preferred embodiment of the method of the invention pyrolysis gas at the plasma converter output is heated up to 1200-1450°C and thus, additional time of high-temperature effect on pyrolysis gas is achieved which prevents it from cooling during its transfer in a gas duct to the heat recovery hot water generator and eliminates spontaneous formation of furans and dioxins.

In the third preferred embodiment of the method of the invention to increase the calorific value of pyrolysis gas and, consequently, expand the amount of electric power and heat generated and decrease emission of carbon dioxide into the atmosphere, the processes of algae cultivation in an enclosed space and production of biomass and liquid biofuel from algae are introduced into the process of waste and biomass processing. During algae cultivation, the prepared algal seeds are loaded to photo-bioreactor filled with fresh water which chemical composition provides maximum algae growth rate and, thus, efficient photosynthesis takes place; in photo-bioreactor the algae are subject to a certain shock during their growth and as a result they start separating at a growing rate accumulating maximum quantity of oleaginous fluid in their mass from which high-quality diesel fuel is produced.

In the fourth preferred embodiment of the method of the invention the produced diesel fuel is cleaned from the water, and it is accumulated to provide a continuous supply under set flow and pressure parameters and afterwards simultaneously with cleaned pyrolysis gas it is fed to the dual-fuel combustion chamber of a gas turbine. Biomass extraction after producing liquid biofuel, is milled and in required quantity fed to the plasma converter and part of algae biomass and oil received as a result of biofuel production, is supplied to external consumers.

In another preferred embodiment of the method of the invention the process of coal waste processing is introduced to expand the range of waste processing; for this coal waste is fed as coal dust to the coal syngas generator unit where it is gasified during an autonomous process (autonomous process means both operation in parallel with generation of pyrolysis gas in the plasma waste and biomass processing unit and autonomous operation). Produced syngas is compressed at the output of a coal syngas generator unit and it is accumulated together with cleaned pyrolysis gas and their mixture is fed to the dual-fuel combustion chamber of a gas turbine as a fuel; steam from the heat recovery steam generator of a gas turbine or steam turbine is used for syngas generation.

Embodiment of the invention will be clear from the following drawings:
Figure 1 illustrates a flowchart of the subject-matter of invention,
Figure 2 illustrates a flowchart of the preferred embodiment of the structural configuration of invention,
Figure 3 illustrates a flowchart of one preferred embodiment of the basalt-like slag processing unit in accordance with invention,
Figure 4 illustrates a flowchart of another embodiment of the basalt-like slag processing unit in accordance with invention,
Figure 5 illustrates the process flowchart of the embodiment for environmentally safe method in accordance with invention,

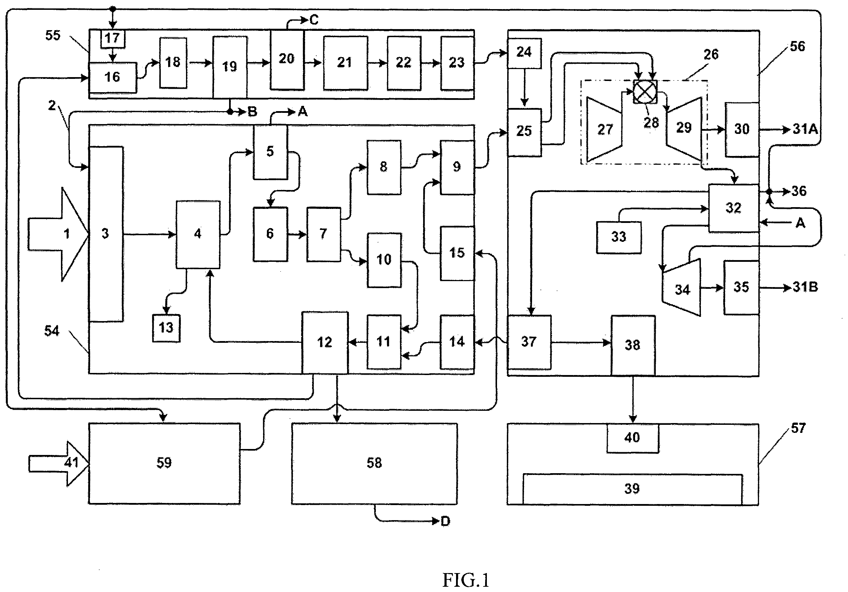

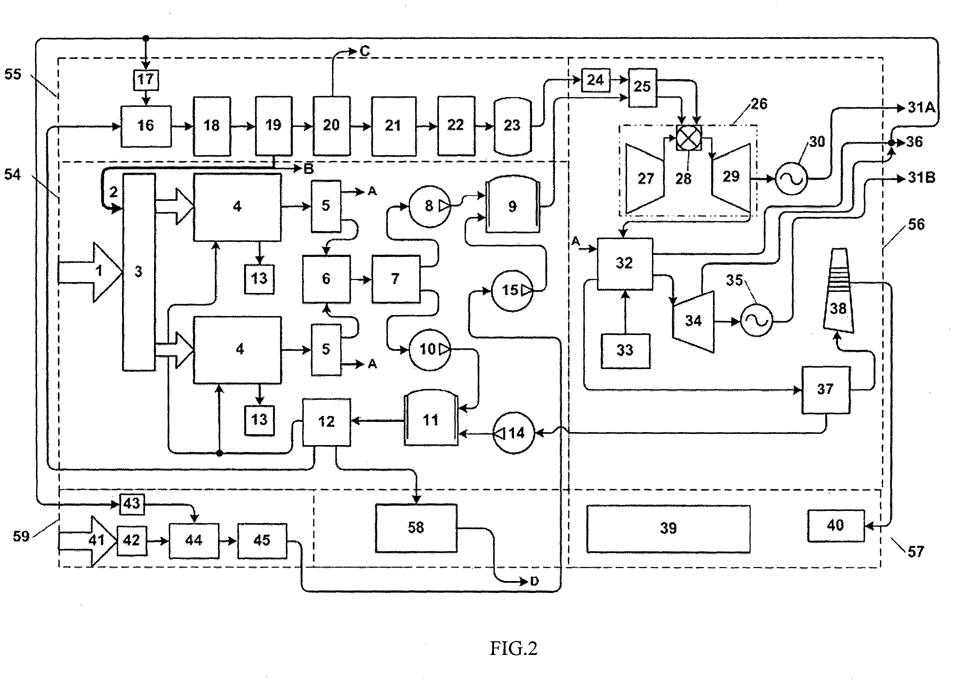

Referring to Figures 1 and 2, the structural configuration comprises five main units, namely: plasma waste and biomass processing unit 54, algae biodiesel and biomass production unit 55, steam & gas turbine unit 56, process control and monitoring unit 57, and carbon dioxide marketable product production unit 58. (Process control and monitoring unit 57 has two-way communications with other units in the configuration, however, these communications are not shown in the drawing for convenience of illustration and clarity).

Plasma waste and biomass processing unit 54 comprises waste and biomass loading and shredding systems 3 with having the first and second inputs which are also the solid municipal and industrial waste treatment input 1 and the biomass treatment input 2. Waste and biomass loading and shredding systems 3 comprises, at least, one output which is connected to the first input of, at least, one plasma converter 4; the second output of the plasma converter 4 is connected to the input of a basalt-like slag processing unit 13. Plasma waste and biomass processing unit 54 also comprises a pyrolysis gas cleaning system 6, first compression system 8 of pyrolysis gas, and first gasholder 9. Output of the first compression system 8 of pyrolysis gas is connected to the first input of the first gasholder 9; and output of the first gasholder 9 is also the second output the of a plasma waste and biomass processing unit 54 which is connected to the second input of a dual-fuel regulator 25 of the steam & gas turbine unit 56. The second input of a dual-fuel regulator 25 is also the second input of the steam & gas turbine unit 56. The first output of a heat recovery hot water generator 5 is also the first output of a plasma waste and biomass processing unit 54 which is connected to the third input of a steam & gas turbine unit 56. The third input of a steam & gas turbine unit 56 is also the third input of a heat recovery steam, generator 32 of the steam & gas turbine unit 56. Steam & gas turbine unit 56 also comprises, at least, one gas turbine 26, compressor 27, dual-fuel combustion chamber 28, turbine 29, at least, one first electrical generator 30, at least, one heat recovery steam generator 32, steam turbine 34, second electrical generator 35, water treatment system 33, and, at least, one exhaust stack 38. Gas turbine 26 comprises a compressor 27, dual-fuel combustion chamber 28, and turbine 29 where the compressor 27 output is connected to the third input of a dual-fuel combustion chamber 28; the first output of a dual-fuel regulator 25 is connected to the first input of a dual-fuel combustion chamber 28, the second output of a dual-fuel regulator 25 is connected to the second input of a dual-fuel combustion chamber 28 and output of the dual-fuel combustion chamber 28 is connected to the turbine 29 input; the first turbine 29 output is connected to the input of the first electrical generator 30 which output is also the first connection output for external power consumers 31A in configuration. The second turbine 29 output of the gas turbine 26 is connected to the first input of a heat recovery steam generator 32; the second input of a heat recovery steam generator 32 is connected to the water treatment system 33; the first output of a heat recovery steam generator 32 connected to the first output of a steam turbine 34 is also the third connection output for external heat consumers 36 in configuration. The second output of a heat recovery steam generator 32 is connected to the steam turbine 34 input; the second output of a steam turbine 34 is connected to the input of the second electrical generator 35 which output is also the second connection output for external power consumers 31B in the configuration. Output of the exhaust stack 38 is connected to the input of a process control and monitoring system 57 having two-way communications with other units in the configuration and consisting of one process control and monitoring system 39 and, at least, one environmental emission control system 40.

The first output of, at least, one plasma converter 4 of the plasma waste and biomass processing unit 54 is connected to the input of a heat recovery hot water generator 5. The second output of the heat recovery hot water generator 5 is connected through pyrolysis gas cleaning system 6 with the input of the first carbon dioxide capture system 7; first output of the first carbon dioxide capture system 7 is connected to the input of the first compression system 8; second output of the first carbon dioxide capture system 7 is connected through the second compression system 10 to, at least, one of the inputs of the second gasholder 11; output of the second gasholder 11 is connected to the input of a carbon dioxide distribution and dosing system 12; output of the carbon dioxide distribution and dosing system 12 is connected to the second input of a plasma converter 4; first output of the carbon dioxide distribution and dosing system 12 is also the third output of a plasma waste and biomass processing unit 54 which is connected to the input of a carbon dioxide marketable product production unit 58. Output of the carbon dioxide marketable product production unit 58 is also a carbon dioxide marketable product output in "D" configuration. The third output of a carbon dioxide distribution and dosing system 12 is also the fourth output of a plasma waste and biomass processing unit 54 which is connected to the first input of the algae biodiesel and biomass production unit 55. The first input of, at least, one dual-fuel regulator 25 of the steam & gas turbine unit 56 is connected to the output of a gas turbine fuel preparation system 24 of the steam & gas turbine unit 56 which input is also the first input of the steam & gas turbine unit 56. The third output of a heat recovery steam generator 32 of the steam & gas turbine unit 56 is connected to the input of the second carbon dioxide capture system 37; first output of the second carbon dioxide capture system 37 is connected to the input of, at least, one exhaust stack 38; second output of the second carbon dioxide capture system 37 is also the fourth output of the steam & gas turbine unit 56 which is connected to the fourth input of the plasma waste and biomass processing unit 54. The fourth input of a plasma waste and biomass processing unit 54 is also the input of the third compression system 14 of a plasma waste and biomass processing unit 54 which output is connected to, at least, one of the inputs of the second gasholder 11. The third input of a plasma waste and biomass processing unit 54 is also the input of the fourth compression system 15 of a plasma waste and biomass processing unit 54 which is connected to the output of a coal syngas generator unit 59; output of the fourth compression system 15 is connected to, at least, one of the inputs of the first gasholder 9.

Algae biodiesel and biomass production unit 55 comprises a photo-bioreactor 16 which first input is also the first input of the algae biodiesel and biomass production unit 55; second input of the photo-bioreactor 16 is connected to the output of the first heat exchanger 17 which input is also the second input of the algae biodiesel and biomass production unit 55; second input of algae biodiesel and biomass production unit 55 is connected to the third connection output for external heat consumers 36. Photo-bioreactor 16 output is connected through the separator 18 to the press 19 input which first output is also the first output of the algae biodiesel and biomass production unit 55. The second input of a plasma waste and biomass processing unit 54 is connected to the first output of the algae biodiesel and biomass production unit 55 which first output is also the algae biomass marketable product output in "B" configuration. The second press 19 output is connected to the centrifuge 20 input which first output is also the second output of the algae biodiesel and biomass production unit 55.

The second output of the algae biodiesel and biomass production unit 55 is also the algae oil marketable product output in "C" configuration. The second centrifuge 20 output is connected through the algae biodiesel production unit 21 and algae biodiesel cleaning system 22 to the algae biodiesel storage 23 input; output of the algae biodiesel storage 23 is also the third output of the algae biodiesel and biomass production unit 55. The third output of the algae biodiesel and biomass production unit 55 is connected to the input of, at least, one gas turbine fuel preparation system 24.

As can be best noted in Figure 2, in the preferred embodiment of invention the structural configuration, in particular, comprises two plasma converters 4 with basalt-like slag processing units 13, two heat recovery hot water generators 5, one pyrolysis gas cleaning system 6, four compression systems 8, 10, 14, and 15 (first, second, third and fourth, respectively), one gas turbine 26, one heat recovery steam generator 32, one steam turbine 34, two electrical generators 30 and 35 (first and second, respectively), two carbon dioxide capture systems 7 and 37 (first and second, respectively), two gasholders 9 and 11 (first and second, respectively), one exhaust stack 38, and one environmental emission control system 40; however, number of the specified equipment and systems can be more, their quantity is determined depending on a certain task.

As can be also best noted in Figure 2, the structural configuration comprises a coal syngas generator unit 59 comprising the first coal dust treatment input 41 which is also the input of a coal dust loading system 42. Output of the coal dust loading system 42 is connected to the first input of a coal syngas generator 44; output of the coal syngas generator 44 is connected to the input of a syngas cleaning system 45 which output is also the output of a coal syngas generator unit 59; second input of a coal syngas generator unit 42 is connected to the output of the second heat exchanger 43 which input is also the second input of a coal syngas generator unit 59; second input of a coal syngas generator unit 59 is connected to the third connection output for external heat consumers 36.

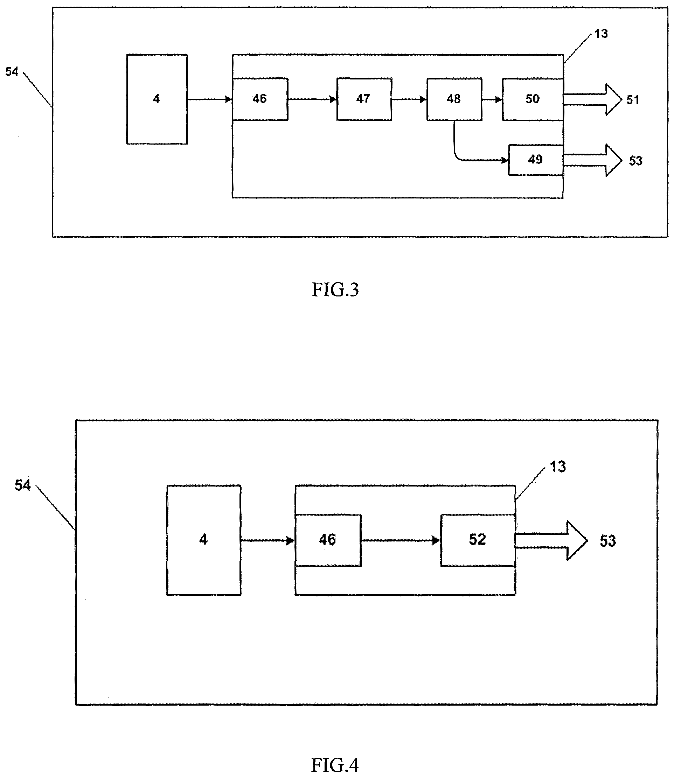

In the embodiment illustrated in Figure 3, basalt-like slag processing unit 13 comprises a liquid slag unloading system 46 which input is connected the second output of a plasma converter 4 of the plasma waste and biomass processing unit 54; output of the liquid slag unloading system 46 is connected through the fiber forming system 47 to the input of a fiber-precipitation system 48; one output of the fiber-precipitation system 48 is connected to the heat-insulation material forming system 50 and another output is connected to the input of a non-fiber particle collecting and granulating system 49; output of the heat-insulation material forming system 50 is also the heat-insulation material output 51 in the configuration; output of the non-fiber particle collecting and granulating system 49 is also the granulated slag output 53 in the configuration.

In the embodiment illustrated in Figure 4, a basalt-like slag processing unit 13 in another modified form comprises a liquid slag unloading system 46 which input is connected the second output of a plasma converter 4 of the plasma waste and biomass processing unit 54; output of the liquid slag unloading system 46 is connected to the input of a slag collecting and granulating system 52; output of the slag collecting and granulating system 52 is also the granulated slag output 53 in the configuration.

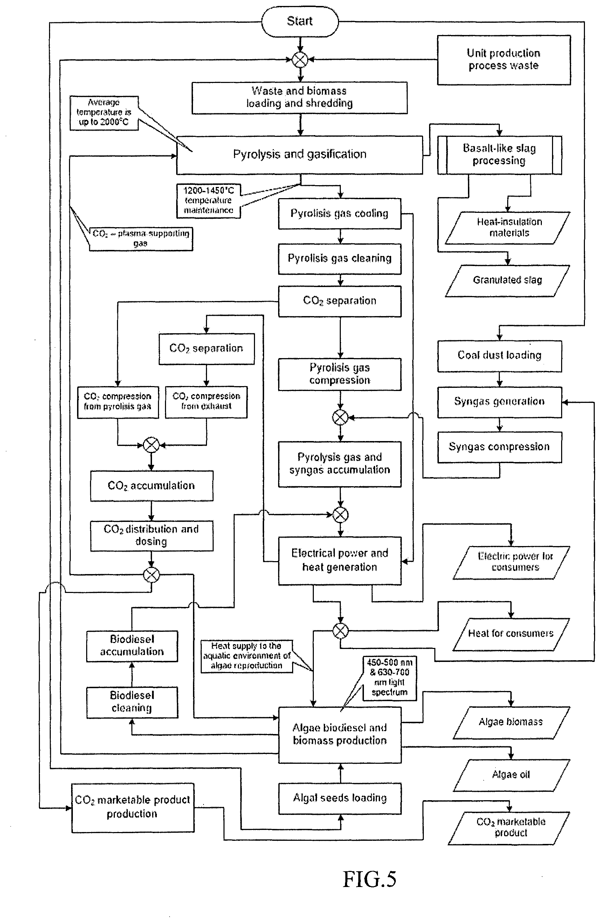

Figure 5 illustrates a process flowchart of the embodiment for an environmentally safe method which is characterized in the following stages of operation:
- waste and biomass fed for processing are loaded and milled;
- waste and biomass fed for processing are subject to pyrolysis and gasification wherefore they are fed to the plasma converter equipped with, at least, one plasma torch to create high temperature inside the plasma converter sufficient for pyrolysis and melting of waste and biomass which are transferred to CO, H2 and hydrocarbons being the main components of pyrolysis gas at the plasma converter output;
- processes in the plasma converter take place at an average temperature of up to 2000°C;
- pyrolysis gas at the plasma converter output is heated up to 1200-1450°C, it is fed through the gas duct for cooling and, thus, additional time of high-temperature effect on pyrolysis gas is achieved which eliminates spontaneous formation of furans and dioxins. During a short period of time resulting pyrolysis gas produced is cooled up to 300-350°C which also eliminates formation of furans and dioxins;
- thermal energy which is released during pyrolysis gas cooling is fed to the steam & gas turbine unit to generate additional electric power;
- pyrolysis gas is cleaned;
- cleaned pyrolysis gas is compressed;
- cleaned pyrolysis gas accumulates;
- cleaned pyrolysis gas is fed to the steam & gas turbine unit where electric power and heat are generated for own needs and external consumers;
- in the plasma converter inorganic components are captured by silicate molecules and as a result a basalt-like slag is produced which is used for production of a granulated slag or heat-insulation materials;
- prior to pyrolysis gas accumulation, carbon dioxide is captured from its composition and it is compressed and accumulated in the carbon dioxide gasholder;
- as a result of steam & gas turbine unit operation, exhaust gas generated is subject to carbon dioxide capture which is compressed and accumulated in the carbon dioxide gasholder;
- at the carbon dioxide gasholder output carbon dioxide is distributed and dosed under set flow, temperature, and pressure parameters and afterwards it is fed as plasma-forming gas to plasma torches installed in the plasma converter to provide pyrolysis and high-temperature gasification inside the plasma converter;
- after carbon dioxide is provided for operation of entire process of waste and biomass processing, its excess is used to produce a marketable product for external consumers;
- all waste occurred as a result of pyrolysis gas cleaning as well as the one occurred as a result of process of waste and biomass processing, is fed to the plasma converter for processing;
- to increase the calorific value of pyrolysis gas and, consequently, expand the amount of electric power and heat generated (increase in economic efficiency of the entire process of waste and biomass processing) and decrease emission of carbon dioxide into the atmosphere, the processes of algae cultivation in an enclosed space and production of biomass and liquid biofuel from algae are introduced into the process of waste and biomass processing. To cultivate the algae, prepared algal seed material is loaded in the photo-bioreactor filled with fresh water which chemical composition provides max algae growth rate, thus, creating efficient photosynthesis. In photo-bioreactor the algae are subject to a certain shock during their growth and they start separating at a growing rate accumulating maximum quantity of oleaginous fluid in their mass from which high-quality diesel fuel is produced;
- the produced diesel fuel is cleaned from the water, and it is accumulated to provide a continuous supply under set flow and pressure parameters and afterwards simultaneously with cleaned pyrolysis gas it is fed to a dual-fuel combustion chamber of the gas turbine; biomass extraction after producing liquid biofuel is milled and fed in required quantity to the plasma converter and part of algae biomass and oil received as a result of biofuel production, is supplied to external consumers.
- captured carbon dioxide is fed as a nutrient to cultivate algae under set flow, temperature, and pressure parameters;
- light source imitating natural sunlight with a light spectral distribution ranging from 450-500 nm to 630-700 nm without scattered infrared light and UV spectrum component is also used to cultivate algae;
- adjustable heat source is used to cultivate algae and it is located directly in the aquatic environment where reproduction of algae takes place;
- the process of coal waste processing is introduced to expand the range of waste processing; coal waste in the form of coal dust is gasified during an independent process and for this it is fed to the gas generator;
- produced syngas is compressed;
- syngas is accumulated together with cleaned pyrolysis gas and their mixture is fed to a dual-fuel combustion chamber of the gas turbine;
- steam from the heat recovery steam generator of a gas turbine or steam turbine is used for syngas generation.

Structural configuration proposed in accordance with invention operates in the following way:
Solid municipal and industrial waste and biomass subject to processing are loaded in the waste and biomass loading and shredding system 3 of the plasma waste and biomass processing unit 54 where they are milled to sizes specified by the requirements of the input equipment of plasma converters 4 (composition of the utilizable substance is not of great importance) and loaded to the plasma converters 4. In the plasma converter 4 pyrolysis gas is produced during the process of pyrolysis and gasification of organic part of waste. Processes in the plasma converter 4 take place at an average temperature of up to 2000°C, thus, waste and biomass under processing are destroyed at molecular level. At the plasma converter 4 output pyrolysis gas of about 1200°C is fed through the gas duct to the heat recovery hot water generator 5 for cooling where it is quickly cooled to 300-350°C. To prevent pyrolysis gas from cooling during its passing in the gas duct to the heat recovery hot water generator 5, pyrolysis gas is heated by a plasma torch up to 1200-1450°C, and, thus, additional time of high-temperature effect on pyrolysis gas is achieved which eliminates spontaneous formation of furans and dioxins. After cooling in the heat recovery hot water generator 5 to 300-350°C, pyrolysis gas is cleaned in the pyrolysis gas cleaning system 6. Using such a method of waste and biomass processing, formation of polychlorinated dioxins and furans is minimized and their value does not exceed 0.01 ng/m3. Then cleaned pyrolysis gas is fed to the first carbon dioxide capture system 7 where pyrolysis gas is subject to carbon dioxide capture. Captured carbon dioxide is compressed in the second compression system 10 and accumulated in the second gasholder 11.

Pyrolysis gas cleaned from carbon dioxide in this manner is compressed in the first compression system 8 and accumulated in the first gasholder 9. As a result, the produced pyrolysis gas is a fuel gas which main components are CO and H2, and it is suitable for gas turbine 26 operation. From the second gasholder 11 output carbon dioxide is fed to carbon dioxide distribution and dosing system 12 where the required amount of carbon dioxide is distributed for operation of plasma torches. After that carbon dioxide is fed as a plasma-forming gas to the plasma torches installed in the plasma converter 4 under set flow, temperature, and pressure parameter to provide pyrolysis and high-temperature gasification to generate pyrolysis gas. In the plasma converter 4 as a result of inorganic waste melting, environmentally friendly and chemically resistant basalt-like slag is produced which can be used as a construction material (according to IAEA ISO 6961-82 procedure leach rate of Na+ ions was (2-3)^{∗}10⁻⁶ g/cm² and leach rate of heavy metals was about 10⁻⁷ g/cm²), which is fed in the form of melt through the drain hole to the basalt-like slag processing unit 13.

Simultaneously with waste and biomass processing in the plasma waste and biomass processing unit 54 the structural configuration, implementing the environmentally safe method of waste and biomass processing, provides production of algae biomass and biodiesel in the algae biodiesel and biomass production unit 55. The prepared algal seed material is loaded in the photo-bioreactor 16 filled with fresh water which chemical composition provides max algae growth rate. After that the water-and-algae mixture is saturated with carbon dioxide which is fed from the carbon dioxide distribution and dosing system 12 of the plasma waste and biomass processing unit 54 under set flow, temperature, and pressure parameters to the photo-bioreactor 16 as a nutrient to cultivate algae. Effective photosynthesis is provided due to specially prepared mixture of water and lighting design, made on the principle of best lamp location and selection of the appropriate lighting spectrum. Sources imitating natural sunlight with a light spectral distribution ranging from 450-500 nm to 630-700 nm without scattered infrared light and UV spectrum component are used as light sources. In addition, adjustable heat source is used for efficient cultivation algae which is placed in the aquatic environment where reproduction of algae takes place. For this purpose tubes or nozzles with heat medium as an adjustable heat source coming from the first heat exchanger 17 are installed in the aquatic environment of the photo-bioreactor 16.

First heat exchanger 17 also provides heating for the room where plasma waste and biomass processing unit 55 is located. In photo-bioreactor 16 the algae get a certain shock during their growth and start separating at a growing rate accumulating maximum quantity of oleaginous fluid in their mass from which high-quality fuel is produced. After maximum growth, all water-and-algae mixture is fed automatically to the separator 18 where water is separated and together with nutrient it is returned to the photo-bioreactor 16 through the water recovery system. Biomass as a result of separation, is fed to the press 19 where algae cell walls are broken under the pressure, liquid (oil with water residues) and biomass are separated. Liquid phase is fed to the centrifuge 20 where algae oil and water are finally separated. This water, containing nutrient, is also returned to the photo-bioreactor 16 through the water recovery system.

Algae oil is fed to the biodiesel production system 21 which breaks the algae lattice at molecular level and afterwards the oil is mixed with a catalyst thoroughly. As a result there is a liquid biodiesel at the output. Liquid fuel produced in the biodiesel production system 21 is cleaned in the algae biodiesel cleaning system 22 and it is fed to the algae biodiesel storage 23. Thus produced liquid fuel from the algae biodiesel storage 23 of the algae biodiesel and biomass production unit 55 and cleaned pyrolysis gas from the first gasholder 9 of the plasma waste and biomass processing unit 54 simultaneously are fed as fuel to operate gas turbine 26 of the steam & gas turbine unit 56. Herewith, pyrolysis gas is fed directly to the second input of the dual-fuel regulator 25 and biodiesel fuel is fed to the first input of the dual-fuel regulator 25 through gas turbine fuel preparation system 24 which provides the required parameters of biodiesel fuel to operate the gas turbine 26.

Two types of fuel (liquid and gaseous) from the output of a dual-fuel regulator 25 and pressure air from the compressor 27 are fed to the dual-fuel combustion chamber 28 in an optimal way (according to operating mode of a gas turbine 26) generating fuel-air mixture which is ignited in the combustion chamber 28. Combustion products and heated air pass to the turbine 29 which provides driving of the first electrical generator 30. Exhaust gases of the gas turbine 26 are fed to the heat recovery steam generator 32 where high-pressure steam is generated to operate steam turbine 34 which provides driving of the second electrical generator 35. Specified quality of the water to generate high-pressure steam in the heat recovery steam generator 32 is provided by the water treatment system 33. Steam & gas turbine unit 56 operates in combined cycle, generates power for external power consumers at the first connection output 31A and at the second connection output 31B as well as it generates heat for external consumers at the third connection output 36. The third connection output 36 is a unified heat medium tract and it combines outputs of the heat recovery steam generator 32 and steam turbine 34. From the third connection output 36 heat in the form of steam or hot water is fed to the input of the first heat exchanger 17 of the algae biodiesel and biomass production unit 55 which output, on the one hand, provides heating of the room where algae biodiesel and biomass production unit 55 is located and, on the other hand, it provides the required heat for photo-bioreactor 16 operation of the same unit.

Steam & gas turbine unit 56 fully meets the own needs in electric power and heat. Steam & gas turbine unit 56 can include, at least, one gas turbine operating in single cycle or, at least, one gas turbine operating with the heat recovery steam generator in a cogeneration mode, or, at least, one gas turbine operating in combined cycle and generated power can be electric energy and or electric and thermal energy. Exhaust gases from the heat recovery steam generator 32 are subject to carbon dioxide capture in the second carbon dioxide capture system 37. Captured carbon dioxide is fed to the plasma waste and biomass processing unit 54 to the input of the third compression system 14 where carbon dioxide is compressed and fed to the second gasholder 11 for accumulation. Exhaust gases after carbon dioxide capture are sent to the exhaust stack 38 and they are discharged into the atmosphere as environmentally safe gas emission, herewith, environmental emission is controlled by the environmental emission control system 40 in the process control and monitoring unit 57.

Excess of carbon dioxide accumulated in the second gasholder 11 of the plasma waste and biomass processing unit 54 after providing the required flow of carbon dioxide as plasma-forming gas for operation of the plasma torches of the plasma converter 4 of the same unit and providing the required flow of carbon dioxide as a nutrient for algae cultivation for operation of the photo-bioreactor 16 of the algae biodiesel and biomass production unit 55 is sent to the carbon dioxide marketable product production unit 58 where carbon dioxide marketable product is produced for external consumers. The following product can be produced in the carbon dioxide marketable product production unit 58 based on the standards equipment:
- dry ice
- carbon dioxide as gas for the next process production:
   - production of high-efficient nitrogen fertilizer, i.e. carbamide;
   - arrangement of CO₂ steam-and-carbon dioxide catalytic conversion to CH₄ methane and methanol;
   - drink carbonation;
   - as shielding gas during welding works with semiautomatic welding machines to protect molten metal against ambient air effect;
   - molds drying during production of easily oxidizing metals, in particular, aluminum.

Simultaneously with waste and biomass processing in the plasma waste and biomass processing unit 54, gasification of coal waste is provided, in particular, coal dust in the coal syngas generator unit 59. Coal dust subject to processing is fed through the coal dust loading system 42 to the coal syngas generator 44 where coal dust gasification takes place. Steam from the heat medium tract from the third connection output 36 is fed through the second heat exchanger 43 to the coal syngas generator 44 to generate the specified composition of syngas. The produced syngas is cleaned in the syngas cleaning system 45 and it is fed to the plasma waste and biomass processing unit 54. In the plasma waste and biomass processing unit 54 syngas is compressed in the fourth compression system 15 and accumulated in the second gasholder 9 together with cleaned pyrolysis gas thus generating syngas and pyrolysis gas mixture.

Automated process control and monitoring system 39 of the process control and monitoring unit 57 having wo-way communications with all other units, provides multilevel monitoring and control of the production process. Waste-free production is provided due to the fact that all waste which is generated during production process is fed to the plasma converter 4 of the plasma waste and biomass processing unit 54 for processing.

Embodiment of invention ensures achievement of the following stated objectives and technological advantages:
- when generating electric and thermal energy, efficiency of solid municipal and industrial waste and biomass processing is increased, and emission of carbon dioxide into the atmosphere is decreased due to carbon dioxide capture from pyrolysis gas;
- when generating electric and thermal energy, emission of carbon dioxide into the atmosphere is decreased due to carbon dioxide capture from exhaust gases of the heat recovery steam generator and its feeding to the algae biodiesel and biomass production unit;
- steam & gas turbine unit capacity is increased due to supply of thermal energy which is released during pyrolysis gas cooling to the heat recovery steam generator of steam & gas turbine unit;
- environmental safety of waste and biomass processing is increased by achieving additional time of 1200-1450°C temperature effect on pyrolysis gas minimizing spontaneous formation of furans and dioxins which value does not exceed 0.01 ng/m³.
- environmental safety of waste and biomass processing is increased due to the fact that processes in the plasma converter take place at an average temperature of up to 2000°C;
- environmentally friendly and chemically resistant basalt-like slag is produced which can be used as a construction material which is characterized in the following: leach rate of Na+ ions is (2-3)^{∗}10⁻⁶ g/cm² and leach rate of heavy metals is approximately 10⁻⁷ g/cm²,
- the range of processing waste is expanded due to introduction of an autonomous coal dust gasification process in the waste processing process with the object of the coal waste processing;
- the range of waste and biomass processing products is expanded due to the production of algae biomass and oil as a raw material for pharmaceutical and fragrance industries and production of dry ice from carbon dioxide as well as usage of carbon dioxide as a marketable product used in industry and agriculture for the following purposes:
   - production of high-efficient nitrogen fertilizer, i.e. carbamide;
   - arrangement of CO₂ steam-and-carbon dioxide catalytic conversion to CH₄ methane and methanol;
   - drink carbonation;
   - as shielding gas during welding works with semiautomatic welding machines to protect molten metal against ambient air effect;
   - molds drying during production of easily oxidizing metals, in particular, aluminum.

The invention has the following economic advantages:
- economic efficiency is increased and payback period is decreased for the Complexes implementing environmentally safe method of waste and biomass processing with generation of electric power and heat due to high-temperature plasma waste and biomass processing together with algae biomass and liquid fuel production, starting with of 25 000 tpa annual production capacity.

Expected scope of use for the embodiment of invention:
The invention relates to energy and ecology sectors, a sector of solid municipal and industrial waste and biomass thermal processing using their energy potential to generate electric and thermal energy as well as to the sector of algae biomass and oil production as a raw material for pharmaceutical and fragrance industries and a sector of marketable products produced from carbon dioxide for different branches of industries.

## Claims

1. Structural configuration of environmentally safe waste and biomass processing to increase the efficiency of electric power and heat generation which comprises a plasma waste and biomass processing unit (54), a biodiesel and biomass production unit (55), a steam & gas turbine unit (56), a process control and monitoring unit (57), a carbon dioxide marketable product production unit (58) and a coal syngas generator unit (59);
wherein the plasma waste and biomass processing unit (54) comprises a first solid municipal and industrial waste treatment input (1), a second biomass treatment input (2), a waste and biomass loading and shredding system (3), at least one plasma converter (4), a heat recovery hot water generator (5), a pyrolysis gas cleaning system (6), a first carbon dioxide capture system (7), a first compression system (8), a first gasholder (9), a second compression system (10), a second gasholder (11), a carbon dioxide distribution and dosing system (12), a basalt-like slag processing unit (13), a third compression system (14) and a fourth compression system (15); wherein the steam & gas turbine unit (56) comprises a gas turbine fuel preparation system (24), a dual-fuel regulator (25), at least one gas turbine (26), at least one electrical generator (30), at least one heat recovery steam generator (32), a water treatment system (33), a steam turbine (34), a second electrical generator (35), a second carbon dioxide capture system (37) and, at least one exhaust stack (38);
wherein the first solid municipal and industrial waste treatment input (1) and the second biomass treatment input (2) are also the first and second inputs for the waste and biomass loading and shredding system (3); wherein at least one output of the waste and biomass loading and shredding system (3) is connected to a first input of the at least one plasma converter (4) and a second output of the at least one plasma converter (4) is connected to an input of the basalt-like slag processing unit (13); wherein an output of the first compression system (8) is connected to a first input of the first gasholder (9); wherein an output of the first gasholder (9) is also a second output of the plasma waste and biomass processing unit (54) which is connected to a second input of the dual-fuel regulator (25) of the steam & gas turbine unit (56) which is also a second input of the steam & gas turbine unit (56); wherein a first output of the heat recovery hot water generator (5) is also a first heat output (A) of the plasma waste and biomass processing unit (54) which is connected to a third input of the steam & gas turbine unit (56) which is also a third input of the at least one heat recovery steam generator (32) of the steam & gas turbine unit (56); wherein the at least one gas turbine (26) comprises a compressor (27), a dual-fuel combustion chamber (28), and a turbine (29); wherein an output of the compressor (27) is connected to a third input of the dual- fuel combustion chamber (28); wherein a first input of the dual-fuel combustion chamber (28) is connected to a first output of the dual-fuel regulator (25) and a second output of the dual-fuel regulator (25) is connected to a second input of the dual-fuel combustion chamber (28); wherein an output of the dual-fuel combustion chamber (28) is connected to an input of the turbine (29); wherein a first output of the turbine (29) is connected to the at least one electrical generator (30) which has an output which is also a first connection output for external power consumers (31 A) in the configuration; wherein a second turbine (29) output is connected to a first input of the at least one heat recovery steam generator (32) and a second input of the at least one heat recovery steam generator (32) is connected to the water treatment system (33); wherein a first output of the at least one heat recovery steam generator (32) is connected to a first output of the steam turbine (34) which is also a third connection output for external heat consumers (36) in the configuration; wherein a second output of the at least one heat recovery steam generator (32) is connected to an input of the steam turbine (34); wherein a second output of the steam turbine (34) is connected to an input of the second electrical generator (35) and an output of the second electrical generator (35) is also a second connection output for external power consumers (31B) in the configuration; wherein an output of the at least one exhaust stack (38) is connected to an input of the process control and monitoring unit (57) having two-way communications with other units in the configuration and consisting of a process control and monitoring system (39) and at least one environmental emission control system (40);
wherein the basalt-like slag processing unit (13) comprises a liquid slag unloading system (46) which is connected to a second output of the plasma converter (4) of the plasma waste and biomass processing unit (54);
wherein either
a) the basalt-like slag processing unit (13) further comprises a fiber forming system (47), a fiber- precipitation system (48), a non-fiber particle collecting and granulating system (49), a heat-insulation material forming system (50), a heat-insulation material output (51) and a granulated slag output (53) and an output of the liquid slag unloading system (46) is connected through the fiber forming system (47) to an input of the fiber-precipitation system (48) and one output of the fiber-precipitation system (48) is connected to the heat-insulation material forming system (50) and another output of the fiber-precipitation system (48) is connected to the input of the non-fiber particle collecting and granulating system (49) and an output of the heat-insulation material forming system (50) is also the heat-insulation material output (51) in the configuration and an output of the non-fiber particle collecting and granulating system (49) is also the granulated slag output (53) in the configuration;
or
b) the basalt-like slag processing unit (13) further comprises a slag collecting and granulating system (52) and a granulated slag output (53) and an output of the liquid slag unloading system (46) is connected the slag collecting and granulating system (52) and an output of the slag collecting and granulating system (52) is also the granulated slag output (53) in the configuration;
wherein a first output of the at least one plasma converter (4) of the plasma waste and biomass processing unit (54) is connected to an input of the heat recovery hot water generator (5) and a second output of the heat recovery hot water generator (5) is connected through the pyrolysis gas cleaning system (6) to an input of the first carbon dioxide capture system (7); wherein a first output of the first carbon dioxide capture system (7) is connected to an input of the first compression system (8) and a second output of the first carbon dioxide capture system (7) is connected through the second compression system (10) to at least one of the inputs of the second gasholder (11); wherein an output of the second gasholder (11) is connected to an input of the carbon dioxide distribution and dosing system (12) and a first output of the carbon dioxide distribution and dosing system (12) is connected to a second input of the plasma converter (4);
wherein a second output of the carbon dioxide distribution and dosing system (12) is also a third output of a plasma waste and biomass processing unit (54) which is connected to an input of the carbon dioxide marketable product production unit (58); wherein an output of the carbon dioxide marketable product production unit (12) is also a carbon dioxide marketable product output (D) in the configuration; wherein a third output of the carbon dioxide distribution and dosing system (12) is also a fourth output of the plasma waste and biomass processing unit (54) which is connected to a first input of the algae biodiesel and biomass production unit (55); wherein the third connection output (36) of the steam & gas turbine unit (56) is connected to a second input of the algae biodiesel and biomass production unit (55) and to a second input of the coal syngas generator unit (59); wherein a third output of the algae biodiesel and biomass production unit (55) is connected to a first input of the steam & gas turbine unit (56); wherein a first input of the dual-fuel regulator (25) of the steam & gas turbine unit (56) is connected to an output of the gas turbine fuel preparation system (24) wherein an input of the gas turbine fuel preparation system (24) is also the first input of the steam & gas turbine unit (56); wherein a third output of the at least one heat recovery steam generator (32) of the steam & gas turbine unit (56) is connected to an input of the second carbon dioxide capture system (37); wherein a first output of the second carbon dioxide capture system (37) is connected to an input of the at least one exhaust stack (38); wherein a second output of the second carbon dioxide capture system (37) is also a fourth output of the steam & gas turbine unit (56) which is connected to a fourth input of the plasma waste and biomass processing unit (54) which is also an input of the third compression system (14) wherein an output of the third compression system (14) is connected to at least one of the inputs of the second gasholder (11); wherein a third input of the plasma waste and biomass processing unit (54) is also an input of the fourth compression system (15) which is connected to an output of the coal syngas generator unit (59) comprising a coal dust treatment input (41); wherein an output of the fourth compression system (15), in its turn, is connected to, at least one of the inputs of the first gasholder (9).

2. Structural configuration as set forth in claim 1 ***characterized in that*** the algae biodiesel and biomass production unit (55) comprises of the first heat exchanger (17), photo-bioreactor (16), separator (18), press (19), centrifuge (20), algae biodiesel production unit (21), algae biodiesel cleaning system (22), and algae biodiesel storage (23) which first input is also the first input of a photo-bioreactor (16); the second photo-bioreactor (16) input is connected to the output of the first heat exchanger (17) which input is also the second input of the algae biodiesel and biomass production unit (55) which is connected to the third connection output for external heat consumers (36) and the second input of a coal syngas generator unit (59); photo-bioreactor (16) output is connected through the separator (18) with the press (19) input which first output is also the first algae biomass marketable product output (B) of the algae biodiesel and biomass production unit (55) which is connected the second input of a plasma waste and biomass processing unit (54); the second press (19) output is connected to the centrifuge (20) input which first output is also the second algae oil marketable product output (C) of the algae biodiesel and biomass production unit (55); the second centrifuge (20) output is connected through the algae biodiesel production unit (21) and algae biodiesel cleaning system (22) with the algae biodiesel storage (23) input; output of the algae biodiesel storage (23) is also the third output of the algae biodiesel and biomass production unit (55) which is connected to the input of, at least, one gas turbine fuel preparation system (24) of a steam & gas turbine unit (56).

3. Structural configuration as set forth in claims 1 and 2 ***characterized in that*** the coal syngas generator unit (59) comprises the first coal dust treatment input (41) which is also the input of a coal dust loading system (42), output of the coal dust loading system (42) is connected to the first input of a coal syngas generator (44) and its output is connected to the input of a syngas cleaning system (45), which output is also the output of a coal syngas generator unit (59), the second input of a coal syngas generator unit (44) is connected to the output of the second heat exchanger (43) which input is also the second input of a coal syngas generator unit (59) and it is connected to the third connection output for external heat consumers (36).

4. Method for environmentally sale waste and biomass processing to increases the efficiency of electric power and heat generation during which waste and biomass are loaded and milled and afterwards they are subject to pyrolysis and gasification; produced pyrolysis gas is cooled, cleaned and carbon dioxide is captured from it; cleaned pyrolysis gas is compressed and accumulated together with syngas; and they are used for electric power and heat generation; this generated electric power and heat are supplied to external consumers; from heat occurred during pyrolysis gas cooling, additional electric energy is generated, in its turn; during pyrolysis and gasification melting occurs and basalt-like slag is formed which is processed and used for production of a heat-insulation material or granulated slag which ***characterized in that*** carbon dioxide captured from the exhaust gases occurred as a result of electric energy and heal generation, is compressed and accumulated together with carbon dioxide captured from pyrolysis gas and after distribution and dosing, first, it is sent to plasma torches as plasma- forming gas, second, it is used for production of carbon dioxide marketable products for external consumers, third, it is fed as nutrient to cultivate algae, herewith, seed material is loaded and algae is cultivated using light and heat sources and carbon dioxide and algae biodiesel and biomass production is provided; produced biodiesel is cleaned, accumulated and used simultaneously with cleaned pyrolysis gas to generate electric power and heat and biomass extraction is returned to the beginning of the process; biomass and algae oil produced during liquid biofuel production is supplied to the external consumers; in addition, to expand the range of processing waste, coal dust is loaded simultaneously at the beginning of the process, syngas is generated using heat then it is compressed and together with cleaned pyrolysis gas it is accumulated and used for generation of electric power and heat.

5. Method as set forth in claim 4 ***characterized in that*** pyrolysis gas at a plasma converter (4) output is heated up to 1200-1450°C and thus, additional time of high-temperature effect on pyrolysis gas is achieved which prevents it from cooling during transfer in a gas duct to a heat recovery hot water generator (5) and eliminates spontaneous formation of furans and dioxins.

6. Method as set forth in claims 4 or 5 ***characterized in that*** to increase the calorific value of pyrolysis gas and, consequently, expand the amount of electric power and heat generated and decrease emission of carbon dioxide into the atmosphere, the processes of algae cultivation in an enclosed space and production of biomass and liquid biofuel from algae are introduced into the process of waste and biomass processing; during algae cultivation, prepared algal seed material is loaded in a photo- bioreactor (16) filled with fresh water which chemical composition provides max algae growth rate, thus, providing efficient photosynthesis; during their growth in photo-bioreactor (16) under a certain shock algae start separating at a growing rate accumulating maximum quantity of oleaginous fluid in their mass from which fuel of high quality is produced.

7. Method as set forth in any of claim 4 to 6 ***characterized in that*** the produced diesel fuel is cleaned from the water, and it is accumulated to provide a continuous supply under set flow and pressure parameters and simultaneously cleaned pyrolysis gas it is fed to a dual-fuel combustion chamber (28) of a gas turbine (26); biomass extraction after producing liquid biofuel is milled and fed in required quantity to the plasma converter (4) and part of algae biomass and oil produced received as a result of liquid biofuel production, is supplied to external consumers.

8. Method as set forth in any of claims 4 to 7 ***characterized in that*** the process of coal waste processing is introduced to expand the range of waste processing; for this coal waste is fed as coal dust to a coal syngas generator unit (59) where it is gasified during an autonomous process (autonomous process means both operation in parallel with generation of pyrolysis gas in a plasma waste and biomass processing unit (54) and autonomous operation); syngas generated at the output of a coal syngas generator unit (59) is compressed and accumulated together with cleaned pyrolysis gas and their mixture is fed to the dual-fuel combustion chamber (28) of the gas turbine (26) as a fuel; steam from a heat recovery steam generator (32) of the gas turbine (26) or steam turbine (34) is used for syngas generation.

## Patentansprüche

1. Strukturelle Konfiguration für umweltfreundliche Abfall- und Biomasseverwertung zur Erhöhung von Effizienz der Energie- und Wärmeerzeugung, die eine Einheit zur Plasmaverarbeitung von Abfällen und Biomasse (54), eine Einheit zur Herstellung von Biodieselkraftstoff und Biomasse aus Algen (55), eine Dampf- und Gasturbineneinheit (56), eine Steuer- und Überwachungseinheit des technologischen Prozesses (57), eine Einheit zur Herstellung von Handelsprodukten aus Kohlendioxid (58) und eine Einheit von Kohle-Synthesegas Generator (59) enthält,
wobei die Einheit zur Plasmaverarbeitung von Abfällen und Biomasse (54) den Ersten Eingang der Verwertung von festen Kommunal- und festen Industrieabfällen (1) und den Zweiten Eingang der Verwertung von Biomasse (2), eine Vorrichtung zum Beladen und Mahlen von Abfällen und Biomasse (3), mindestens einen Plasmakonverter (4), einen Wärmerückgewinnungs-Heißwassererzeuger (5), eine Pyrolysegas-Reinigungsvorrichtung (6), die Erste Kohlendioxid-Auffangvorrichtung (7), die Erste Kompressionsvorrichtung (8), den Ersten Gasbehälter (9), die Zweite Kompressionsvorrichtung (10), den Zweiten Gasbehälter (11), eine Verteil- und Dosierungsvorrichtung von Kohlendioxid (12), eine Einheit zur Verarbeitung von basaltartiger Schlacke (13), die Dritte Kompressionsvorrichtung (14) und die Vierte Kompressionsvorrichtung (15) enthält;
wobei die Dampf- und Gasturbineneinheit (56) einer Kraftstoffaufbereitungsvorrichtung für eine Gasturbine (24), einen Dual-Fuel-Regler (25), mindestens eine Gasturbine (26) und mindestens Einen Elektrischen Generator (30) und einen Abhitzedampferzeuger (32), eine Wasseraufbereitungsvorrichtung (33), eine Dampfturbine (34), einen Zweiten Elektrischen Generator (35), eine Zweite Kohlendioxid-Auffangvorrichtung (37) und mindestens ein Abgasrohr (38) enthält;
wobei der Erste Eingang der Verwertung von festen Kommunal- und festen Industrieabfällen (1) und der Zweite Eingang der Verwertung von Biomasse (2), auch der Erste und der Zweite Eingang der Vorrichtung zum Beladen und Mahlen von Abfällen und Biomasse (3) sind; wobei mindestens ein Ausgang der Vorrichtung zum Beladen und Mahlen von Abfällen und Biomasse (3) mit dem Ersten Eingang mindestens eines Plasmakonverters (4) und der Zweite Ausgang mindestens eines Plasmakonverters (4) mit dem Eingang der Einheit zur Verarbeitung von basaltartiger Schlacke verbunden sind (13); wobei der Ausgang der Ersten Kompressionsvorrichtung (8) mit dem Ersten Eingang des Ersten Gasbehälters (9) verbunden ist; wobei der Ausgang des Ersten Gasbehälters (9) auch ein Zweiter Ausgang der Einheit zur Plasmaverarbeitung von Abfällen und Biomasse ist (54), der mit dem Zweiten Ausgang des Dual-Fuel-Reglers (25) von Dampf- und Gasturbineneinheit (56) verbunden ist, der auch der Zweite Eingang der Dampf- und Gasturbineneinheit ist (56); wobei der Erste Ausgang des Wärmerückgewinnungs-Heißwassererzeugers (5) auch der erste Ausgang für Wärme (A) der Einheit der Plasmaverarbeitung von Abfällen und Biomasse (54) ist, der mit dem Dritten Eingang der Dampf- und Gasturbineneinheit verbunden ist (56), der auch der Dritte Eingang des Abhitzedampferzeugers (32) von Dampf- und Gasturbineneinheit (56) ist;
wobei mindestens eine Gasturbine (26) einen Kompressor (27), eine Dual-Fuel-Brennkammer (28) und eine Turbine (29) enthält; wobei der Ausgang des Kompressors (27) mit dem Dritten Eingang der Dual-Fuel-Brennkammer (28) verbunden ist; wobei der Erste Eingang der Dual-Fuel-Brennkammer (28) mit dem Ersten Ausgang des Dual-Fuel-Reglers (25) verbunden ist und der Zweite Ausgang des Dual-Fuel-Reglers (25) mit dem Zweiten Eingang der Dual-Fuel-Brennkammer (28) verbunden ist; wobei der Ausgang der Dual-Fuel-Brennkammer (28) mit dem Eingang der Turbine (29) verbunden ist; wobei der Erste Ausgang der Turbine (29), mindestens mit dem Ersten Elektrischen Generator (30) verbunden ist, dessen Ausgang auch der Erste Verbindungsausgang für externe elektrische Energieverbraucher (31A) der Konfiguration ist;
wobei der Zweite Ausgang der Turbine (29) mit dem Ersten Eingang mindestens eines Abhitzedampferzeugers (32) und der Zweite Eingang mindestens eines Abhitzedampferzeugers (32) mit der Wasseraufbereitungsvorrichtung (33) verbunden ist; wobei der Erste Ausgang mindestens eines Abhitzedampferzeugers (32) mit dem Ersten Ausgang der Dampfturbine (34) verbunden ist, der auch der Dritte Verbindungsausgang für externe Wärmeverbraucher (36) der Konfiguration ist; wobei der Zweite Ausgang mindestens eines Abhitzedampferzeugers (32) mit dem Eingang der Dampfturbine (34) verbunden ist; wobei der Zweite Ausgang der Dampfturbine (34) mit dem Eingang des Zweiten Elektrischen Generators (35) verbunden ist und der Ausgang des Zweiten Elektrischen Generators (35) auch der Zweite Verbindungsausgang für externe elektrische Energieverbraucher (31B) der Konfiguration ist;
wobei der Ausgang mindestens eines Abgasrohrs (38) mit dem Eingang einer Steuer- und Überwachungseinheit des technologischen Prozesses (57) verbunden ist, die bilaterale Verbindungen mit anderen Einheiten der Konfiguration aufweist und aus der Steuer- und Überwachungsvorrichtung des technologischen Prozesses (39) besteht, sowie von mindestens einer Vorrichtung zur ökologischen Kontrolle von Abgas (40);
wobei die Einheit zur Verarbeitung von basaltartiger Schlacke (13) eine Vorrichtung zum Entladen von flüssiger Schlacke (46) enthält, die mit dem Zweiten Ausgang des Plasmakonverters (4) der Einheit zur Plasmaverarbeitung von Abfällen und Biomasse (54) verbunden ist;
wobei entweder
a) die Einheit zur Verarbeitung von basaltartiger Schlacke (13) weiter eine Faserbildungsvorrichtung (47), eine Faserablagerungsvorrichtung (48), eine Vorrichtung zum Sammeln und Granulieren von Nichtfaserpartikeln (49), eine Vorrichtung zum Bilden eines Wärmeisolationsmaterials (50), einen Ausgang von Wärmeisolationsmaterialien (51) und einen Ausgang von granulierter Schlacke (53) und einen Ausgang der Vorrichtung zum Entladen von flüssiger Schlacke (46) durch die Faserbildungsvorrichtung (47) ist mit dem Eingang der Faserablagerungsvorrichtung (48) verbunden und ein weiterer Ausgang der Faserablagerungsvorrichtung (48) ist mit der Vorrichtung zum Bilden des Wärmeisolationsmaterials (50) verbunden und ein anderer Ausgang der Faserablagerungsvorrichtung (48) ist mit dem Eingang der Vorrichtung zum Sammeln und Granulieren von Nichtfaserpartikeln (49) verbunden, und der Ausgang der Vorrichtung zum Bilden des Wärmeisolationsmaterials (50) ist auch der Ausgang von Wärmeisolationsmaterialien (51) der Konfiguration und der Ausgang der Vorrichtung zum Sammeln und Granulieren von Nichtfaserpartikeln (49) ist auch der Ausgang von granulierter Schlacke (53) der Konfiguration;
oder
b) die Einheit zur Verarbeitung von basaltartiger Schlacke (13) weiter eine Vorrichtung zum Sammeln und Granulieren von Schlacke (52) und einen Ausgang von granulierter Schlacke (53) und einen Ausgang der Vorrichtung zum Entladen von flüssiger Schlacke (46) ist mit dem Eingang der Vorrichtung zum Sammeln und Granulieren von Schlacke (52) verbunden, und der Ausgang der Vorrichtung zum Sammeln und Granulieren von Schlacke (52) ist auch der Ausgang von granulierter Schlacke (53) der Konfiguration;
wobei der Erste Ausgang mindestens eines Plasmakonverters (4) der Einheit zur Plasmaverarbeitung von Abfällen und Biomasse (54) mit dem Eingang des Wärmerückgewinnungs-Heißwassererzeugers (5) und der Zweite Ausgang des Wärmerückgewinnungs-Heißwassererzeugers (5) durch die Pyrolysegas-Reinigungsvorrichtung (6) mit dem Eingang der Ersten Kohlendioxid-Auffangvorrichtung (7) verbunden ist; wobei der Erste Ausgang der Ersten Kohlendioxid-Auffangvorrichtung (7) mit dem Eingang der Ersten Kompressionsvorrichtung (8) verbunden ist und der Zweite Ausgang der Ersten Kohlendioxid-Auffangvorrichtung (7) über die Zweite Kompressionsvorrichtung (10) mit mindestens einem Eingang des Zweiten Gasbehälters (11) verbunden ist; wobei der Ausgang des Zweiten Gasbehälters (11) mit dem Eingang der Verteil- und Dosierungsvorrichtung von Kohlendioxid (12) verbunden ist und der Erste Ausgang der Verteil- und Dosierungsvorrichtung von Kohlendioxid (12) mit dem Zweiten Eingang des Plasmakonverters (4) verbunden ist;
wobei der Zweite Ausgang der Verteil- und Dosierungsvorrichtung von Kohlendioxid (12) auch der Dritte Ausgang der Einheit zur Plasmaverarbeitung von Abfällen und Biomasse (54) ist, die mit dem Eingang der Einheit zur Herstellung von Handelsprodukten aus Kohlendioxid (58) verbunden ist; wobei der Ausgang der Einheit zur Herstellung von Handelsprodukten aus Kohlendioxid (58) auch der Ausgang von Handelsprodukten aus Kohlendioxid (D) in der Konfiguration ist; wobei der Dritte Ausgang der Verteil- und Dosierungsvorrichtung von Kohlendioxid (12) auch der Vierte Ausgang der Einheit der Plasmaverarbeitung von Abfällen und Biomasse (54) ist, der mit dem Ersten Eingang der Einheit zur Herstellung von Biodieselkraftstoff und Biomasse aus Algen (55) verbunden ist; wobei der Dritte Verbindungsausgang für externe Wärmeverbraucher (36) der Dampf- und Gasturbineneinheit (56) mit dem Zweiten Eingang der Einheit zur Herstellung von Biodieselkraftstoff und Biomasse aus Algen (55) und dem Zweiten Eingang der Einheit von Kohle-Synthesegas Generator (59) verbunden ist; wobei der Dritte Ausgang der Einheit zur Herstellung von Biodieselkraftstoff und Biomasse aus Algen (55) mit dem Ersten Eingang der Dampf-und Gasturbineneinheit (56) verbunden ist; wobei der Erste Eingang des Dual-Fuels-Reglers (25) der Dampf-und Gasturbineneinheit (56) mit dem Ausgang einer Kraftstoffaufbereitungsvorrichtung für eine Gasturbine (24) verbunden ist, wobei der Eingang einer Kraftstoffaufbereitungsvorrichtung für eine Gasturbine (24) auch der Erste Eingang der Dampf-und Gasturbineneinheit (56) ist; wobei der Dritte Ausgang mindestens eines Abhitzedampferzeugers (32) der Dampf- und Gasturbineneinheit (56) mit dem Eingang der Zweiten Kohlendioxid-Auffangvorrichtung (37) verbunden ist; wobei der Erste Ausgang der Zweiten Kohlendioxid-Auffangvorrichtung (37) mit dem Eingang von mindestens einem Abgasrohr (38) verbunden ist; wobei der Zweite Ausgang der Zweiten Kohlendioxid-Auffangvorrichtung (37) auch der Vierte Ausgang der Dampf- und Gasturbineneinheit (56) ist, der mit dem Vierten Eingang der Einheit zur Plasmaverarbeitung von Abfällen und Biomasse (54) verbunden ist, der auch der Eingang der Dritten Kompressionsvorrichtung (14) ist; wobei der Ausgang der Dritten Kompressionsvorrichtung (14) mit mindestens einem der Eingänge des Zweiten Gasbehälters (11) verbunden ist; wobei der Dritte Eingang der Einheit der Plasmaverarbeitung von Abfällen und Biomasse (54) auch der Eingang der Vierten Kompressionsvorrichtung (15) ist, die mit dem Ausgang der Einheit von Kohle-Synthesegas Generator (59) verbunden ist, der den Verwertungseingang für Kohlenstaub (41) enthält; wobei der Ausgang der Vierten Kompressionsvorrichtung (15) seinerseits mit mindestens einem Eingang des Ersten Gasbehälters (9) verbunden ist.

2. Strukturelle Konfiguration nach vorangehendem Anspruch 1, ***dadurch gekennzeichnet*, *dass die*** Einheit zur Herstellung von Biodieselkraftstoff und Biomasse aus Algen (55) enthält den Ersten Wärmetauscher (17), einen Photobioreaktor (16), einen Separator (18), eine Presse (19), eine Zentrifuge (20), eine Vorrichtung zur Erzeugung von Biodieselkraftstoff aus Algen (21), eine Vorrichtung zur Reinigung von Biodieselkraftstoff aus Algen (22) und einen Speicher für Biodieselkraftstoff aus Algen (23), dessen Erster Eingang auch der Erste Eingang des Photobioreaktors (16) ist; der Zweite Eingang des Photobioreaktors (16) ist mit dem Ausgang des Ersten Wärmetauschers (17) verbunden, dessen Eingang auch der Zweite Eingang der Einheit zur Herstellung von Biodieselkraftstoff und Biomasse aus Algen (55) ist, die mit dem Dritten Verbindungsausgang für externe Wärmeverbraucher (36) und dem Zweiten Eingang der Einheit von Kohle-Synthesegas Generator verbunden ist (59); der Ausgang des Photobioreaktors (16) ist über den Separator (18) mit dem Eingang der Presse (19) verbunden, deren Erster Ausgang auch der Erste Ausgang von Handelsprodukten der Biomasse aus Algen (B) der Einheit zur Herstellung von Biodieselkraftstoff und Biomasse aus Algen (55) ist, mit der der Zweite Eingang der Einheit der Plasmaverarbeitung von Abfällen und Biomasse (54) verbunden ist; der Zweite Ausgang der Presse (19) ist mit dem Eingang der Zentrifuge (20) verbunden, deren Erster Ausgang auch der Zweite Ausgang von Handelsprodukten der Öl aus Algen (C) der Einheit zur Herstellung von Biodieselkraftstoff und Biomasse aus Algen (55) ist; der Zweite Ausgang der Zentrifuge (20) ist mit dem Eingang des Speichers für Biodieselkraftstoff aus Algen (23) über eine Vorrichtung zur Erzeugung von Biodieselkraftstoff aus Algen (21) und eine Vorrichtung zur Reinigung von Biodieselkraftstoff aus Algen (22) verbunden; der Ausgang des Speichers für Biodieselkraftstoff aus Algen (23) ist auch der Dritte Ausgang der Einheit zur Herstellung von Biodieselkraftstoff und Biomasse aus Algen (55), der mit dem Eingang mindestens einer Krafftstoffaufbereitungsvorrichtung für eine Gasturbine (24) der Dampf- und Gasturbineneinheit (56) verbunden ist.

3. Strukturelle Konfiguration nach vorangehenden Ansprüchen 1 und 2, ***dadurch gekennzeichnet, dass*** die Einheit von Kohle-Synthesegas Generator (59) den Ersten Verwertungseingang für Kohlenstaub (41) enthält, der auch der Eingang der Kohlenstaubladevorrichtung (42) ist; der Ausgang der Kohlenstaubladevorrichtung (42) ist mit dem Ersten Eingang von Kohle-Synthesegas Generator (44) verbunden, und der Ausgang ist mit dem Eingang der Synthesegas-Reinigungsvorrichtung (45) verbunden, deren Ausgang auch der Ausgang der Einheit von Kohle-Synthesegas Generator (59) ist, der Zweite Eingang von Kohle-Synthesegas Generator (44) ist mit dem Ausgang des Zweiten Wärmetauschers (43) verbunden, dessen Eingang ist auch der Zweite Eingang der Einheit von Kohle-Synthesegas Generator (59) und der mit dem Dritten Verbindungsausgang für die externen Wärmeverbraucher (36) verbunden ist.

4. Verfahren für umweltfreundliche Abfall- und Biomasseverwertung zur Erhöhung von Effizienz der Energie- und Wärmeerzeugung, bei dem Abfälle und Biomasse geladen und gemahlen und anschließend einer Pyrolyse und Vergasung unterzogen werden; das entstehende Pyrolysegas wird abgekühlt, gereinigt, Kohlendioxid wird extrahiert; das gereinigte Pyrolysegas wird zusammen mit Synthesegas komprimiert und gespeichert und dann zur Erzeugung von Energie und Wärme verwendet; anfallende Energie und Wärme werden für externe Kunden bereitgestellt; aus der Wärme, die beim Abkühlen des Pyrolysegases entsteht, erzeugen wir wiederum zusätzliche Energie; während der Pyrolyse und Vergasung kommt es zum Schmelzen und zur Bildung von basaltartiger Schlacke, die verarbeitet wird und aus der wir Wärmeisolationsmaterialien oder granulierte Schlacke herstellen, ***dadurch gekennzeichnet, dass*** wir Kohlendioxid aus Abgas, das bei der Erzeugung von Energie und Wärme entsteht, zusammen mit Kohlendioxid aus dem Pyrolysegas komprimieren und es nach Verteilung und Dosierung einerseits als plasmabildendes Gas zu Plasmabrennern leiten, andererseits zur Herstellung von Handelsprodukten aus Kohlendioxid für externe Verbraucher verwenden; drittens dient es als Nährstoff für den Algenanbau, während wir Saatgut verladen und Algen mit Hilfe von Licht- und Wärmequellen sowie Kohlendioxid treiben, wodurch die Erzeugung von Biodieselkraftstoff und Biomasse aus Algen sichergestellt wird; der erzeugte Biodieselkraftstoff wird gereinigt, gespeichert und gleichzeitig mit gereinigtem Pyrolysegas zur Erzeugung von Energie und Wärme verwendet, und Pressrückstände von Biomasse werden zum Prozessanfang zurückgeführt; bei der Herstellung von flüssigen Biokraftstoffen gewonnene Biomasse und Öl aus Algen werden an externe Verbraucher geliefert; zur Erweiterung des Angebotes an recyclefähigen Abfällen wird Kohlenstaub gleichzeitig mit dem Prozessanfang verladen, Synthesegas wird unter Verwendung von Wärme generiert, danach komprimiert, zusammen mit dem gereinigten Pyrolysegas gespeichert und zur Erzeugung von Energie und Wärme verwendet.

5. Verfahren nach vorangehendem Anspruch 4, ***dadurch gekennzeichnet, dass*** das Pyrolysegas am Ausgang des Plasmakonverters (4) auf die Temperatur von 1200-1450 °C erwärmt wird, somit wird längere Wirkzeit der Hochtemperatur auf das Pyrolysegas erreicht, als Folge wird Abkühlung des Pyrolysegases während des Durchgangs durch den Gaskanal in den Wärmerückgewinnungs-Heißwassererzeuger (5) verhindert und die spontane Bildung von Furanen und Dioxinen wird ausgeschlossen.

6. Verfahren nach vorangehendem Anspruch 4 oder 5, ***dadurch gekennzeichnet,* dass** zur Erhöhung des Kaloriengehalts von Pyrolysegas und dementsprechend zur Erhöhung der Menge an erzeugten Energie und Wärme und zur Verringerung der Kohlendioxidemissionen in der Atmosphäre, werden in den technologischen Prozess der Verwertung von Abfällen und Biomasse die Prozesse der Algenkultivierung in einem geschlossenen Volumen und der Erzeugung von Biomasse und flüssigen Biodieselkraftstoffen aus Algen eingeführt; bei der Algenkultivierung wird der vorbereitete Algensamen in einen mit frischem Wasser gefüllten Photobioreaktor (16) gefüllt, dessen chemische Zusammensetzung die maximale Wachstumsrate der Algen und damit eine wirksame Photosynthese gewährleistet; während ihres Wachstums im Photobioreaktor (16) beginnen die Algen sich unter der Einwirkung eines bestimmten Schocks schnell zu teilen und speichern in ihrer Masse die maximale Menge an öliger Flüssigkeit, aus der hochwertiger Dieselkraftstoff produziert wird.

7. Verfahren nach einem der vorangehenden Ansprüche 4 bis 6, ***dadurch gekennzeichnet, dass*** der erzeugte Biodieselkraftstoff von Wasser gereinigt und gespeichert wird, um eine kontinuierliche Versorgung mit festgelegten Verbrauchs- und Druckangaben zu gewährleisten, und gleichzeitig mit dem gereinigten Pyrolysegas in die Dual-Fuel-Brennkammer (28) der Gasturbine (26) eingespeist wird; nach der Herstellung von flüssigen Biokraftstoffen werden die Presserückstände von Biomasse zerkleinert, die benötigte Menge wird an den Plasmakonverter (4) geliefert und ein Teil von Biomasse und Öl aus Algen, die während der Erzeugung von flüssigem Biokraftstoff entstehen, wird den externen Verbrauchern bereitgestellt.

8. Verfahren nach einem der vorangehenden Ansprüche 4 bis 7, ***dadurch gekennzeichnet, dass*** zur Erweiterung des Angebotes an recyclefähigen Abfällen wird der Prozess der Verwertung von Abfallkohlen eingeführt, bei dem die Abfallkohle in Form von Kohlenstaub in die Einheit von Kohle-Synthesegas Generator (59) eingeleitet werden, wo sie in einem autonomen technologischen Prozess vergast werden (der autonome technologische Prozess läuft sowohl parallel zum Prozess der Produktion von Pyrolysegas in der Einheit zur Plasmaverarbeitung von Abfällen und Biomasse (54), als auch unabhängig davon); das aus dem Ausgang der Einheit von Kohle-Synthesegas Generator (59) resultierende Synthesegas wird komprimiert, zusammen mit dem gereinigten Pyrolysegas gespeichert, und das resultierende Gemisch wird als Brennstoff in die Dual-Fuel-Brennkammer (28) der Gasturbine (26) eingespeist; zur Erzeugung von Synthesegas wird Dampf aus dem Abhitzedampferzeuger (32) der Gasturbine (26) oder der Dampfturbine (34) verwendet.

## Revendications

1. Configuration de structure pour le traitement de biomasse et de déchets sans danger pour l'environnement pour accroître le rendement de production d'énergie et de chaleur, qui contient l'unité de traitement par plasma des déchets et de la biomasse (54), l'unité de production de carburant biodiesel et de biomasse à partir d'algues (55), l'unité turbine gaz-vapeur (56), l'unité de contrôle et de surveillance de processus (57), l'unité de production de produits commerciaux à partir de dioxyde de carbone (58) l'unité d'un générateur de gaz de synthèse de houille (59) dans laquelle l'unité de traitement par plasma des déchets et de la biomasse (54) contient la première entrée de traitement de déchets municipaux et industriels solides (1) et la deuxième entrée de traitement de biomasse (2), un dispositif de chargement et de broyage des déchets et de la biomasse (3), au moins un convertisseur de plasma (4), un générateur d'eau chaude à récupération de chaleur (5), un dispositif d'épuration de gaz de pyrolyse (6), le premier dispositif de capture de dioxyde de carbone (7), le premier dispositif de compression (8), le premier gazomètre (9), le deuxième dispositif de compression (10), le second gazomètre (11), un dispositif de distribution et de dosage du dioxyde de carbone (12), l'unité de traitement de scories du type basaltique (13), le troisième dispositif de compression (14) et le quatrième dispositif de compression (15)
dans laquelle l'unité turbine gaz-vapeur (56) contient le dispositif de préparation de combustible pour la turbine à gaz (24), le régulateur bicarburant (25), au moins une turbine à gaz (26), au moins un générateur électrique (30), au moins un générateur de vapeur à récupération de chaleur (32), le dispositif de traitement d'eau (33), la turbine à vapeur (34), le second générateur électrique (35), le second dispositif de capture de dioxyde de carbone (37) et au moins un tuyau d'échappement de gaz (38);
dans laquelle la première entrée de traitement des déchets solides municipaux et industriels (1) et la deuxième entrée de traitement de biomasse (2) sont également la première et la deuxième entrées du dispositif de chargement et de broyage des déchets et de la biomasse (3); dans laquelle au moins une sortie du dispositif de chargement et de broyage des déchets et de la biomasse (3) est connectée à la première entrée d'au moins un convertisseur de plasma (4) et la seconde sortie d'au moins un convertisseur de plasma (4) est connectée à l'entrée de l'unité de traitement scories du type basaltique (13); dans laquelle la sortie du premier dispositif de compression (8) est connectée à la première entrée du premier gazomètre (9); dans laquelle la sortie du premier gazomètre (9) est également la deuxième sortie de l'unité de traitement au plasma de déchets et de biomasse (54), qui est connectée à la deuxième entrée du régulateur bicarburant (25) de l'unité turbine gaz-vapeur (56), qui est également la deuxième entrée de l'unité turbine gaz-vapeur (56);
dans laquelle la première sortie du générateur d'eau chaude à récupération de chaleur (5) est également la première sortie de chaleur (A) de l'unité de traitement par plasma des déchets et de la biomasse (54), qui est connectée à la troisième entrée de l'unité turbine gaz-vapeur (56), qui est également la troisième entrée du générateur de vapeur à récupération de chaleur (32) de l'unité turbine gaz-vapeur (56);
dans laquelle au moins une turbine à gaz (26) contient un compresseur (27), une chambre de combustion bicarburante (28) et une turbine (29); dans laquelle, la sortie du compresseur (27) est raccordée à la troisième entrée de la chambre de combustion bicarburante (28); dans laquelle la première entrée de la chambre de combustion bicarburante (28) est connectée à la première sortie du régulateur bicarburant (25) et la seconde sortie du régulateur bicarburant (25) est connectée à la deuxième entrée de la chambre de combustion bicarburante (28); dans laquelle la sortie de la chambre de combustion bicarburante (28) est connectée à l'entrée de la turbine (29); dans laquelle la première sortie de la turbine (29) est connectée au moins au premier générateur électrique (30), dont la sortie est également la première sortie de connexion pour les consommateurs d'électricité externes (31A) de la configuration; dans laquelle la deuxième sortie de la turbine (29) est connectée à la première entrée d'au moins un générateur de vapeur à récupération de chaleur (32), et la deuxième entrée à au moins un générateur de vapeur à récupération de chaleur (32) est connectée au dispositif de traitement d'eau (33); dans laquelle la première sortie d'au moins un générateur de vapeur à récupération de chaleur (32) est raccordée à la première sortie de la turbine à vapeur (34), qui est également la troisième sortie de connexion pour les consommateurs de chaleur externes (36) de la configuration; dans laquelle la deuxième sortie d'au moins un générateur de vapeur à récupération de chaleur (32) est connectée à l'entrée de la turbine à vapeur (34); dans laquelle la deuxième sortie de la turbine à vapeur (34) est connectée à l'entrée du deuxième générateur électrique (35) et la sortie du deuxième générateur électrique (35) est également la deuxième sortie de connexion pour les consommateurs d'électricité externes (31B) de la configuration; dans laquelle la sortie d'au moins un tuyau d'échappement de gaz (38) est raccordée à l'entrée de l'unité de contrôle et de surveillance de processus (57) qui est connectée de manière bilatérale avec d'autres unités de la configuration et comprend le dispositif de commande et de surveillance du processus technologique (39), ainsi qu'au moins un dispositif de contrôle des émissions dans l'environnement (40);
dans laquelle l'unité de traitement de scories du type basaltique (13) contient un dispositif de déchargement de laitier liquide (46) connecté à la deuxième sortie du convertisseur de plasma (4) de l'unité de traitement par plasma des déchets et de biomasse (54);
dans laquelle ou
a) l'unité de traitement de scories du type basaltique (13) comprend en outre un dispositif de formation de fibres (47), dispositif de précipitation de fibres (48), dispositif de collection et de granulation des particules non-fibreuses (49), dispositif pour former des matériaux thermiquement isolants (50), la sortie de matériaux d'isolation thermique (51) et la sortie de laitier granulé (53), et la sortie du dispositif d'évacuation de scories liquide (46) à travers le dispositif de formation de fibres (47) sont connectées à l'entrée du dispositif de précipitation de fibres (48), et une sortie du dispositif de précipitation de fibres (48) est connectée au dispositif de formation de matériau isolant thermique (50), et l'autre sortie du dispositif de dépôt de fibres (48) est connectée à l'entrée du dispositif de collection et de granulation de particules non-fibreuses (49), et la sortie du dispositif destiné à former des matériaux calorifuges (50) est également une sortie des matériaux calorifuges (51) de la configuration et la sortie du dispositif de collection et de granulation de particules non-fibreuses (49) est également la sortie de scories granulées (53) de la configuration;
ou
b) l'unité de traitement pour scories du type basaltique (13) comprend en outre un dispositif de collection et de granulation de laitier (52) et une sortie de laitier granulé (53) et un dispositif d'évacuation de laitier liquide (46) connecté à l'entrée de collection et de granulation de laitier (52), et la sortie du dispositif de collection et de granulation de laitier (52) est également une sortie de laitier granulé (53) de la configuration;
dans laquelle la première sortie d'au moins un convertisseur de plasma (4) de l'unité de traitement par plasma de déchets et de biomasse (54) est connectée à l'entrée du générateur d'eau chaude (5) et à la seconde sortie du générateur d'eau chaude à récupération de chaleur (5) par l'intermédiaire d'un dispositif d'épuration de gaz de pyrolyse (6) connecté à l'entrée du premier dispositif de capture de dioxyde de carbone (7); dans laquelle la première sortie du premier dispositif de capture de dioxyde de carbone (7) est connectée à l'entrée du premier dispositif de compression (8) et la seconde sortie du premier dispositif de capture de dioxyde de carbone (7) est connectée à l'une des secondes entrées par l'intermédiaire du second dispositif de compression (10) connecté au moins à l'une des entrées du second gazomètre (11); dans laquelle la sortie du second gazomètre (11) est connectée à l'entrée du dispositif de distribution et de dosage de dioxyde de carbone (12) et la première sortie du dispositif de distribution et de dosage de dioxyde de carbone (12) est connectée à la seconde entrée de convertisseur de plasma (4);
dans laquelle la deuxième sortie de l'unité de distribution et de dosage de dioxyde de carbone (12) est également la troisième sortie de l'unité de traitement par plasma de déchets et de biomasse (54), qui est reliée à l'entrée de l'unité de production de produits commerciaux à partir de dioxyde de carbone (58); dans laquelle la sortie de de l'unité de production de produits commerciaux à partir de dioxyde de carbone (58) est également la sortie de produits commerciaux à partir de dioxyde de carbone (D) de la configuration; dans laquelle la troisième sortie de l'unité de distribution et de dosage de dioxyde de carbone (12) est également la quatrième sortie de l'unité de traitement par plasma de déchets et de biomasse (54), qui est connectée à la première entrée de l'unité de production de carburant biodiesel et de biomasse à partir d'algues (55); dans laquelle la troisième sortie de la connexion (36) de l'unité turbine gaz-vapeur (56) est connectée à la deuxième entrée de l'unité de production de carburant biodiesel et de biomasse à partir d'algues (55) et à la deuxième entrée de l'unité de générateur de gaz de synthèse de houille (59); dans laquelle la troisième sortie de l'unité de production de carburant biodiesel et de biomasse à partir d'algues (55) est associée à la première entrée de l'unité turbine gaz-vapeur (56); dans laquelle la première entrée du régulateur bicarburant (25) de l'unité turbine gaz-vapeur (56) est connectée à la sortie d'un dispositif de préparation de carburant pour une turbine à gaz (24), dans laquelle l'entrée d'un dispositif de préparation de carburant pour une turbine à gaz (24) est également la première entrée de l'unité turbine gaz-vapeur (56); dans laquelle la troisième sortie d'au moins un générateur de vapeur à récupération de chaleur (32) de l'unité turbine gaz-vapeur (56) est connectée à l'entrée du deuxième dispositif de capture de dioxyde de carbone (37); dans laquelle la première sortie du deuxième dispositif de capture de dioxyde de carbone (37) est connectée à l'entrée d'au moins un tuyau d'échappement de gaz (38); dans laquelle la deuxième sortie du deuxième dispositif de capture de dioxyde de carbone (37) est également la quatrième sortie de l'unité turbine gaz-vapeur (56), qui est connectée à la quatrième entrée de l'unité de traitement par plasma de déchets et de biomasse (54), qui est également l'entrée du troisième dispositif de compression (14), dans laquelle la sortie du troisième dispositif de compression (14) est connectée au moins à l'une des entrées du second gazomètre (11); dans laquelle la troisième entrée de l'unité de traitement par plasma de déchets et de biomasse (54) est également l'entrée du quatrième dispositif de compression (15), qui est connectée à la sortie de l'unité générateur de gaz de synthèse de houille (59), contenant l'entrée d'utilisation de la poussière de houille (41); dans laquelle la sortie du quatrième dispositif de compression (15) est à son tour connectée au moins à l'une des entrées du premier gazomètre (9).

2. La configuration de structure de la page 1, ***caractérisée en ce que*** l'unité de production de carburant biodiesel et de biomasse à partir d'algues (55) contient le premier échangeur de chaleur (17), le photobioréacteur (16), le séparateur (18), la presse (19), la centrifugeuse (20), le dispositif pour la production de carburant biodiesel d'algue (21), un dispositif pour nettoyer le carburant biodiesel d'algue (22) et un bac de stockage de carburant biodiesel d'algue (23), dont la première entrée est également la première entrée du photobioréacteur (16); la deuxième entrée du photobioréacteur (16) est reliée à la sortie du premier échangeur de chaleur (17), l'entrée étant également la deuxième entrée de l'unité de production de carburant biodiesel et de biomasse d'algue (55), qui est reliée à la troisième sortie de la connexion pour les consommateurs de chaleur externes (36) et la seconde l'entrée de l'unité générateur de gaz de synthèse de houille (59); la sortie du photobioréacteur (16) à travers le séparateur (18) est reliée à l'entrée de la presse (19), dont la première sortie est également la première sortie de biomasse commercialisable d'algue (B) de l'unité de production de carburant biodiesel et de biomasse d'algue (55) à laquelle est connectée la deuxième entrée de l'unité de traitement par plasma de déchets et de biomasse (54); la deuxième sortie de presse (19) est reliée à l'entrée de la centrifugeuse (20), la première sortie étant également la deuxième sortie d'huile commercialisable d'algue (C) de l'unité de production de carburant biodiesel et de biomasse d'algue (55); la seconde sortie de centrifugeuse (20) est connectée à l'entrée du bac de stockage de biodiesel d'algue (23) par l'intermédiaire d'un dispositif de production de carburant biodiesel d'algue (21) et d'un dispositif de nettoyage de carburant biodiesel d'algue (22); la sortie du bac de stockage de biodiesel d'algue est également la troisième sortie de l'unité de production de carburant biodiesel et de biomasse d'algue (55), qui est connectée à l'entrée d'au moins un dispositif de préparation de carburant pour la turbine à gaz (24) de l'unité turbine gaz-vapeur (56).

3. La configuration de structure selon les revendications 1 et 2, ***caractérisée en ce que*** l'unité du générateur de gaz de synthèse de houille (59) contient la première entrée d'utilisation de poussière de houille (41), qui est également l'entrée du dispositif de chargement de poussière de houille (42), la sortie du dispositif de chargement de poussière de houille (42) est connectée à la première entrée du générateur de gaz de synthèse de houille (44), et la sortie à l'entrée du dispositif d'épuration de gaz de synthèse (45), dont la sortie est également la sortie de l'unité générateur de gaz de synthèse de houille (59), la deuxième entrée du générateur de gaz de synthèse de houille (44) est reliée à la sortie du deuxième échangeur de chaleur (43), l'entrée qui est aussi la deuxième entrée du bloc pour les générateurs gaz de synthèse de houille (59) et qui est reliée à la troisième sortie de la connexion pour le consommateur de chaleur externe (36).

4. Une procédé pour le traitement de biomasse et de déchets sans danger pour l'environnement pour accroître le rendement de production d'énergie et de chaleur, au cours de laquelle les déchets et la biomasse sont chargés et broyés, puis soumis à une pyrolyse et à une gazéification; le gaz de pyrolyse résultant est refroidi, épuré, extrait de dioxyde de carbone; le gaz de pyrolyse purifié est comprimé et accumulé avec le gaz de synthèse, puis utilisé pour la production d'électricité et de chaleur; l'électricité et le chauffage produits sont fournis aux clients externes; de la chaleur qui se forme lors du refroidissement du gaz de pyrolyse, nous produisons à son tour une puissance électrique supplémentaire; au cours de la pyrolyse et de la gazéification, il se produit une fusion qui conduit à la formation de scories du type basaltique qui est traité et produit des matériaux isolants thermiques ou du laitier granulé ***caractérisé en ce que*** le dioxyde de carbone développé des gaz d'échappement générés lors de la production d'électricité et de chaleur, comprimé, accumulé avec le dioxyde de carbone émis par le gaz de pyrolyse et après distribution et dosage, d'une part, nous envoyons comme gaz de formation de plasma aux torches à plasma, d'autre part, nous utilisons pour la production produits de dioxyde de carbone pour les consommateurs externes, en troisième lieu, nous servons d'élément nutritif pour la croissance des algues, lors du chargement des semences et de la croissance des algues en utilisant des sources lumineuses, de la chaleur et du dioxyde de carbone, nous assurons la production de biodiesel et de biomasse à partir d'algues; du biodiesel produit, production d'électricité et de chaleur, et l'extraction de biomasse est renvoyée au début du processus; obtenus dans la production de biocarburants liquides, la biomasse et les huiles d'algues fournissent aux consommateurs externes; en outre, simultanément avec le début du processus afin d'élargir la gamme de déchets en cours de traitement, nous chargeons la poussière de charbon, générons du gaz de synthèse en utilisant la chaleur, puis comprimons le gaz de synthèse que nous accumulons avec le gaz de pyrolyse purifié et que nous utilisons pour générer de l'électricité et de la chaleur.

5. Le procédé selon les revendications 4 ***caractérisée en ce que*** le gaz de pyrolyse à la sortie du convertisseur de plasma (4) est chauffé à une température de 1200-1450 °C de ce fait, nous fournissons un temps supplémentaire d'impact à haute température sur le gaz de pyrolyse, empêchant ainsi son refroidissement lors du passage par le conduit de gaz vers le générateur d'eau chaude à récupération de chaleur (5), et cela exclut la formation spontanée de furannes et de dioxines.

6. Le procédé selon les revendications 4 - 5 ***caractérisé en ce que*** afin d'augmenter le contenu calorique du gaz de pyrolyse et, en conséquence, la quantité d'électricité et de chaleur générées et de réduire les émissions de dioxyde de carbone dans l'atmosphère, nous introduisons les processus de croissance des algues dans un volume fermé et la production de biomasse et de biocarburant liquide à partir d'algues dans le processus technologique de valorisation des déchets et de la biomasse; dans le processus de culture des algues, les graines d'algues préparées sont chargées dans un photobioréacteur (16), rempli d'eau douce, dont la composition chimique assure le taux de croissance maximal des algues et, de ce fait, garantit une photosynthèse efficace; au cours de leur croissance dans le photo-bioréacteur (16), sous l'effet d'un choc certain, les algues commencent rapidement à se diviser et à accumuler dans leur masse la quantité maximale de liquide huileux à partir de laquelle nous produisons du carburant diesel de haute qualité.

7. Le procédé selon l'une quelconque des revendications. 4 - 6 ***caractérisé en ce que*** nettoyé le carburant biodiesel de l'eau et s'accumule pour assurer un approvisionnement continu avec les paramètres spécifiés de débit et de pression, et en même temps, avec le gaz de pyrolyse purifié, nous alimentons la chambre de combustion bicarburante (28) de la turbine à gaz (26); après la production de biocarburants liquides, l'extraction de la biomasse est broyée et nous fournissons la quantité requise au convertisseur de plasma (4), et nous fournissons une partie de la biomasse et du pétrole provenant d'algues obtenues dans le processus de production de biocarburant liquide aux consommateurs externes.

8. Le procédé selon l'une quelconque des revendications. 4 - 7 ***caractérisé en ce que*** afin d'élargir la gamme de déchets recyclables, nous introduisons le processus d'utilisation des déchets de charbon, pour lesquels les déchets de charbon sous forme de poussière de charbon sont introduits dans le générateur de gaz de synthèse de houille (59), où nous les gazéifions selon un processus technologique autonome (le processus technologique autonome implique à la fois le fonctionnement en parallèle avec la production de gaz de pyrolyse dans l'unité de traitement au plasma de déchets et de biomasse (54) aussi que le fonctionnement indépendent); le gaz de synthèse résultant de la sortie de l'unité générateur de gaz de synthèse de houille (59) est comprimé, accumulé avec le gaz de pyrolyse purifié, et la mixtion obtenue est amenée à la chambre de combustion à deux carburants (28) de la turbine à gaz (26) en tant que carburant; pour produire du gaz de synthèse, on utilise de la vapeur provenant du générateur de vapeur à récupération de chaleur (32) de la turbine à gaz (26) ou de la turbine à vapeur (34).
